(19) Europäisches Patentamt
European Patent Office
Office européen des brevets

(11) EP 4 596 661 B1

(12) EUROPEAN PATENT SPECIFICATION

(45) Date of publication and mention of the grant of the patent:
**17.06.2026 Bulletin 2026/25**

(21) Application number: **24192861.3**

(22) Date of filing: **05.08.2024**

(51) International Patent Classification (IPC):
***C10M 149/04*** *(2006.01)*

(52) Cooperative Patent Classification (CPC):
**C10M 149/04; C08F 212/28;** C10M 2217/022; C10M 2217/0225; C10N 2020/04

(54) **AMINE CONTAINING POLYMER COMPOSITIONS**

AMINHALTIGE POLYMERZUSAMMENSETZUNGEN

COMPOSITIONS DE POLYMÈRE CONTENANT DES AMINÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.02.2024 US 202463549831 P**
**01.08.2024 US 202418791841**

(43) Date of publication of application:
**06.08.2025 Bulletin 2025/32**

(73) Proprietor: **Infineum International Limited**
**Abingdon, Oxfordshire OX13 6BB (GB)**

(72) Inventor: **HAIDASZ, Evan**
**Linden, 07036 (US)**

(74) Representative: **Hart, Richard Joseph et al**
**PO Box 1, Milton Hill**
**Abingdon, Oxfordshire OX13 6BB (GB)**

(56) References cited:
**US-A1- 2010 152 364** **US-B2- 9 364 825**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 596 661 B1

## Description

### FIELD

This disclosure relates to polymer compositions and methods of using such compositions, which may be derived from monomer compositions containing aromatic structures each containing at least one aminic nitrogen. In particular, such functional monomers may be anionically polymerized to form the functional polymers disclosed herein.

### BACKGROUND

There are myriad references disclosing nitrogen-containing (amine) groups pendant to the phenyl ring in styrenic monomers/polymers/copolymers. However, monomers and polymers bearing such pendant groups can be chemically difficult to synthesize reliably/repetitively. Even when such synthesis can be accomplished, there can be issues with propagation within the polymerization reactions containing such amine-functionalized styrenic monomers, whether alone or as copolymer with other styrenic monomers. For example, US2010/152364 relates to a polymer comprising an amine styrene monomer.

Thus, frequently the amine group can be added to a smattering of monomer repeat units using post-polymerization chemical reactions. But post-polymerization chemistry can often come through with different issues, even if it may avoid the propagation issues of amine-functionalized styrenic monomers.

As such, it is desirable to develop an unconventional way to functionalize a styrenic monomer pre-polymerization, particularly one that was neutral to, or perhaps even enhanced, the propagation within the polymerization reaction.

U.S. Patent Nos. 6,486,272, 9,364,825, 10,202,494, and 10,046,285, disclose polymers made from styrenic monomers bearing nitrogen-containing groups pendant to the phenyl ring. GB Patent No. 1 381 755 discloses amine-functional monomer compounds, but only with acrylamide functionality. Other examples of potentially relevant publications include, but are not necessarily limited to, U.S. Patent Nos. 7,790,661, 7,960,320, 8,778,854, and 10,414,999; and PCT Publication No. WO 2021/127183.

Based on the difficulty of preparing and polymerizing styrenic monomers bearing nitrogen-containing groups pendant to the phenyl ring, Applicant has explored other potential structures for functional monomers which are both simpler to manufacture and also polymerize. These functional monomer compositions containing aromatic structures each containing at least one aminic nitrogen are described in commonly owned related U.S. Provisional Application Serial No. 63/483,365 filed on February 6, 2023.

U.S. Patent No. 2,778,826 ("the ’826 Schmidle patent") and a 1955 article by Schmidle and Mansfield, entitled "The Aminomethylation of Olefins. I. The Reaction of Secondary Amines, Formaldehyde, and Olefins," both disclose various reactions alleging formation of 3-aryl-3-butenyl-1-amines, in which the formaldehyde and secondary amine allegedly formed an iminium, which reacted with the styrenic olefin to form only the terminal (vinylidene) double-bond version of the amine-functional styrenic. The 1955 article also disclosed amine-functionalization of terpenoids such as $\alpha$- and $\beta$- pinene, camphene, and limonene, but not isoprene or similar conjugated non-aromatic compounds.

1983 article by Cohen and Onopchenko, entitled "Competing Hydride Transfer and Ene Reactions in the Aminoalkylation of 1-Alkenes with N,N-Dimethylmethyleniminium Ions. A Literature Correction" (citing, in part, to the ’826 Schmidle patent, inter alia), further disclosed a mechanistic study of specifically dimethyliminimum compounds reacting with styrenic and non-styrenic olefins. Notably, at the beginning of the Discussion section, the 1983 article opines that the ’826 Schmidle patent (and presumably the 1955 article containing strikingly similar experiments and results thereto) had made mistakes. Nonetheless, with respect to aminomethylation of $\alpha$-methylstyrene, the 1983 article indicated formation of vinylidene-based product, in tandem with a significant vinylene (not terminal double-bond) content and a quite significant (13%, in the case of the dimethylamino-version) saturated aryl alkane-amine content.

The inventive monomers disclosed in U.S. Provisional Application Serial No. 63/483,365 have, to the best of the Applicant’s knowledge, not been previously polymerized.

Based on the foregoing, there is a need to provide functional polymers based on alpha-substituted functional monomers, and in particular functional polymers based on functional monomer compositions containing aromatic structures each containing at least one aminic nitrogen utilizing anionic polymerization processing techniques.

### SUMMARY

Accordingly, the present disclosure provides inventive polymer compositions based on anionic polymerization of addition-polymerizable monomer compositions of structure (I)) below, with emphasis on the vinylidene (terminal double-bond, or "exo") version of structure (I) being a desired monomer. Other monomer byproducts may be present in the monomer composition, as dictated by the various synthesis schemes by which the monomers are produced, and are described in U.S. Provisional Application Serial No. 63/483,365 filed on February 6, 2023.

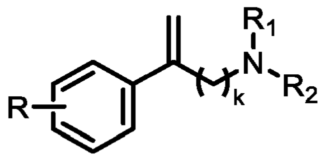 (I)

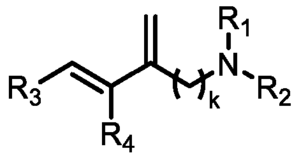 (II)

wherein k is an integer from 1 to 3, preferably 2; wherein $R_1$ and $R_2$ are each independently a hydrocarbyl group or a hydrocarbonaceous group having 1 to 4 additional heteroatoms, such as O, N, S, P, Se, and combinations thereof, or wherein $R_1$ and $R_2$ are connected to form a moiety containing at least one 5- to 12- membered ring, from 3 to 24 carbons, and optionally 1 to 6 additional heteroatoms (such as O, N, S, P, Se, and combinations thereof); wherein R, in structure (I), is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group (such as a methyl group), a $C_1$-$C_6$ hydrocarbyl group containing 1 to 4 additional heteroatoms (such as O, N, S, P, Se, and combinations thereof), or a second amino-functional group having structure (III)

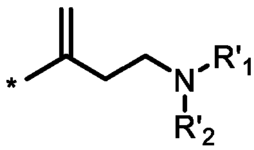 (III)

attached via the asterisk, with $R'_1$ and $R'_2$ being independently the same or different as $R_1$ and $R_2$ but defined identically.

In one form, disclosed herein is a copolymer comprising:

(a) one or more amine-derivatized alpha-methyl styrene (ADAMS) repeat units according to structure (V):

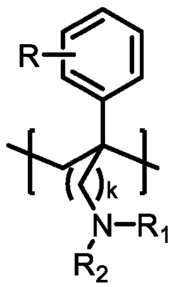 (V)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

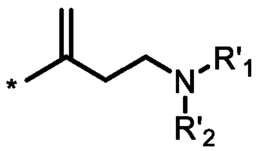 (III)

attached via the asterisk, with $R'_1$ and $R'_2$ being independently the same or different as $R_1$ and $R_2$ but defined identically; and (b) one or more repeat units according to structures (VI), ($VII_a$), ($VII_b$), or combinations thereof

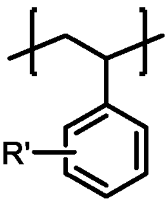

(VI)

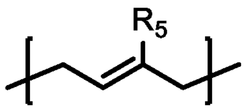

($VII_a$)

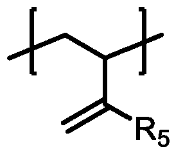

($VII_b$)

wherein: $R_5$ is a hydrogen or methyl group; R' is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, and/or combinations thereof.

In another form, disclosed herein is a polymer comprising: (a) three or more amine-derivatized alpha-methyl styrene (ADAMS) repeat units according to structure (V):

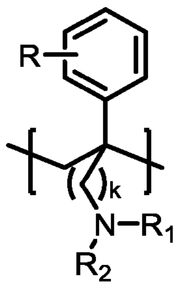

(V)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

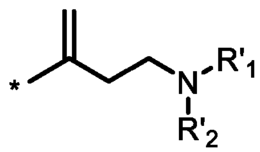

(III)

attached via the asterisk, with $R'_1$ and $R'_2$ being independently the same or different as $R_1$ and $R_2$ but defined identically; and (b) substantially absent of other repeat units.

In still yet another form, disclosed herein is a copolymer comprising: the reaction product of: (a) one or more monomers according to structure (I)

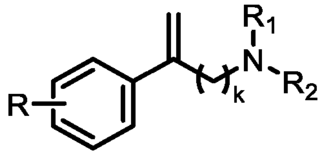 (I)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

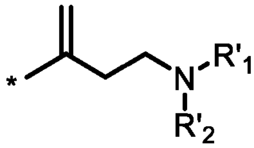 (III)

attached via the asterisk, with $R'_1$ and $R'_2$ being independently the same or different as $R_1$ and $R_2$ but defined identically; (b) isoprene, 1,3-butadiene, styrene, or a combination thereof; and (c) an alkyl lithium, alkyl sodium, alkyl potassium initiator, or a combination thereof.

Other aspects of the present disclosure may become apparent from the Detailed Description and Examples sections hereinbelow.

## DETAILED DESCRIPTION

All numerical values within the detailed description and the claims herein are modified by "about" or "approximately" the indicated value, and take into account experimental error and variations that would be expected by a person having ordinary skill in the art.

The present disclosure provides for novel polymers based on anionic polymerization of functionalized styrenic monomers including a nitrogen-containing moiety, other than as pendant to the phenyl ring. Thus, the monomers of structure (I) were developed to achieve nitrogen-containing functionality on an alpha-substituted styrenic monomer other than as pendant to the phenyl ring on the styrene unit..

It should be noted that prior art references often describe functionalized styrenic monomer with nitrogen containing groups pendant to the phenyl ring in general terms (e.g. "dimethylaminoethyl styrene"), which can be similar to the k = 2 monomer structure provided below, however, the prior art does not teach or suggest the alpha-substituted functional monomers specifically disclosed herein.

The inventive functional polymers disclosed herein based on functionalized styrenic monomers including a nitrogen-containing moiety, other than as pendant to the phenyl ring may be polymerized from addition-polymerizable monomer compositions including amine-derivatized alpha-methyl styrene (ADAMS) monomers according to structure (I).

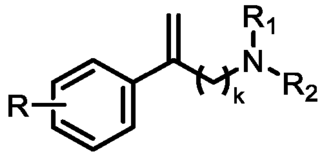 (I)

wherein k is an integer from 1 to 3, preferably 2; wherein $R_1$ and $R_2$ are each independently a hydrocarbyl group or a hydrocarbonaceous group having 1 to 4 additional heteroatoms, such as O, N, S, P, Se, and combinations thereof, or wherein $R_1$ and $R_2$ are connected to form a moiety containing at least one 5- to 12- membered ring, from 3 to 24 carbons, and optionally 1 to 6 additional heteroatoms (such as O, N, S, P, Se, and combinations thereof); wherein R, in structure (I), is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group (such as a methyl group), a $C_1$-$C_6$ hydrocarbyl group containing 1 to 4 additional heteroatoms (such as O, N, S, P, Se, and combinations thereof), or a second amino-functional group having structure (III)

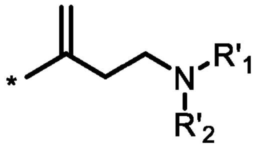 (III)

attached via the asterisk, with R'$_1$ and R'$_2$ being independently the same or different as $R_1$ and $R_2$ but defined identically.

The inventive functional polymers disclosed herein based on functionalized styrenic monomers including a nitrogen-containing moiety, other than as pendant to the phenyl ring may be polymerized from the exemplary ADAMS monomers according to structure (I), which include, but are not limited to, 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-din-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl)amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, and combinations thereof.

In some embodiments, the inventive functional polymers disclosed herein based on the functionalized styrenic monomers including a nitrogen-containing moiety, other than as pendant to the phenyl ring may be polymerized from the exemplary ADAMS monomers according to structure (I), may exhibit a k value of exactly 2.

For clarity, and as used herein, the inventive functional polymers disclosed herein based on the functionalized styrenic monomers including a nitrogen-containing moiety, other than as pendant to the phenyl ring may be polymerized from the exemplary ADAMS monomers of structure (I) having a vinylidene bond, such as originating from the olefinic double-bond in alpha-methylstyrene, which can be reflected in -3-ene/-3-enyl language of the IUPAC nomenclature, for example.

The polymer compositions disclosed herein may optionally contain residues of initiators and/or co-initiators that are, or may be, used in living or pseudo-living anionic polymerization reactions. Non-limiting examples may include alkyl residues from sec-butyllithium, n-butyllithium, tert-butyllithium, and the like, and combinations, reaction products, and/or degradation products thereof.

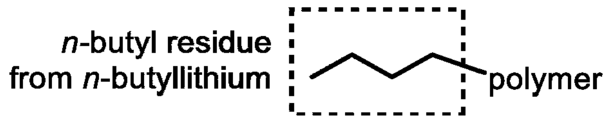

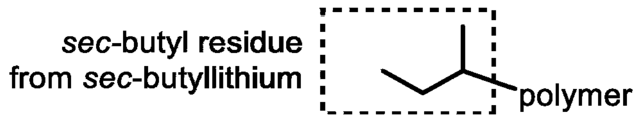

The alkyl residues from monofunctional initiators may optionally be present at one or more termini of the polymer backbone, while alkyl residues of difunctional initiators may optionally be present at about the center of the polymer backbone.

The monofunctional initiator which may be used may be an alkyl lithium, alkyl sodium, or alkyl potassium compound, generally in the C2 to C12 range. Alkyl lithium compounds such as methyllithium, ethyllithium, n-propyllithium, isopropylithium, n-butyllithium, iso-butyllithium, sec-butyllithium, tert-butyllithium, n-amyllithium, iso-amyllithium, sec-amyllithium, tert-amyllithium, hexyllithium, or a combination thereof, are preferred. Secondary alkyl lithium compounds, such as *sec*-butyllithium, sec-amyllithium, or a combination thereof, are more preferred. Most preferred is sec-butyllithium. Substituted alkyllithiums may also be used, such as aralkyllithium compounds, for example, benzyllithium, 1-lithioethylbenzene, and 1-lithio-3-methylpentylbenzene.

The difunctional initiator which may be used may be an alkyl dilithium, alkyl disodium, or alkyl dipotassium compound, generally in the C2 to C12 range, such as 1,3-propanediyldilithium, 1,4-butanediyldilithium, 1,5-pentanediyldilithium, 1,6-hexanedilyllithium, or a combination thereof. Additional difunctional initiators are disclosed in U.S. Pat. No. 6,492,469,

The inventive functional polymers disclosed herein based on functionalized styrenic monomers including a nitrogen-containing moiety, other than as pendant to the phenyl ring, may be preferentially polymerized via anionic polymerization processes. However, additionally or alternatively, the inventive functional polymers disclosed herein based on functionalized styrenic monomers including a nitrogen-containing moiety, other than as pendant to the phenyl ring, may optionally utilize initiators and/or co-initiators that are, or may be, used in (free) radical polymerization reactions. Non-limiting examples may include, but are not necessarily limited to, azibisisobutyronitrile (AIBN), di-tert-butyl peroxide, and the like, and combinations, reaction products, and/or degradation products thereof.

Provided herein are inventive anionically polymerized polymers derived from functionalized styrenic monomers including a nitrogen-containing moiety, other than as pendant to the phenyl ring. More particularly, the functionalized styrenic monomers including a nitrogen-containing moiety, other than as pendant to the phenyl ring have the general structure:

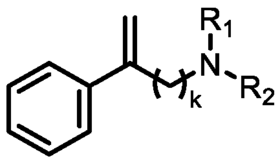

wherein $R_1$ and $R_2$ are each independently a hydrocarbyl group or a hydrocarbonaceous group having 1 to 4 additional heteroatoms, such as O, N, S, P, Se, and combinations thereof, or wherein $R_1$ and $R_2$ are connected to form a moiety containing at least one 5-to 12- membered ring, from 3 to 24 carbons, and optionally 1 to 6 additional heteroatoms (such as O, N, S, P, Se, and combinations thereof). Monomers with k = 2 are preferable due to ease of monomer synthesis and favorable reactivity in the polymerization. Alternatively, monomers with $k \geq 3$ may be used, but are more complex to prepare and are less commercially feasible. Alternatively, monomers with k = 1 may be used, but are difficult to polymerize via anionic polymerization.

The functionalized styrenic monomers including a nitrogen-containing moiety, other than as pendant to the phenyl ring, may be alternatively co-polymerized with isoprene, butadiene, styrene, and combinations thereof. Other non-limiting exemplary co-monomers that may be co-polymerized with the functionalized styrenic monomers including a nitrogen-containing moiety, other than as pendant to the phenyl ring, include, various alkyl-substituted styrenes *(i.e.* 2-methylstyrene, 3-methylstyrene, 4-methylstyrene, 4-ethylstyrene, 4-n-butylstyrene, 4-tert-butylstyrene, 2,4-dimethylstyrene, 3,5-dimethylstyrene, 2,4,6-trimethylstyrene, 2,4-diethylstyrene, 3,5-diethylstyrene, 2,4-dipropylstyrene, 2-methyl-4-ethylstyrene, 2-methyl-4-propylstyrene, and the like), vinylnaphthalene, vinylpyridine, piperylene, methylpentyldiene, or a combination thereof. In another form, the functionalized styrenic monomers including a nitrogen-containing moiety, other than as pendant to the phenyl ring, may be homopolymerized, either as an isolable homopolymer or a homopolymer block in a copolymer.

Depending on the reactivity ratios of the styrenic monomers including a nitrogen-containing moiety, other than as pendant to the phenyl ring, and the other co-monomers present in the polymerization reaction, the repeat units of structure (V) may, in some cases, form alternating structures with the repeat units of structures (VI), ($VII_a$), ($VII_b$), or a combination thereof. For example, the reaction below, wherein $R_1$, $R_2$, and $R_5$, have the same meanings as indicated above.

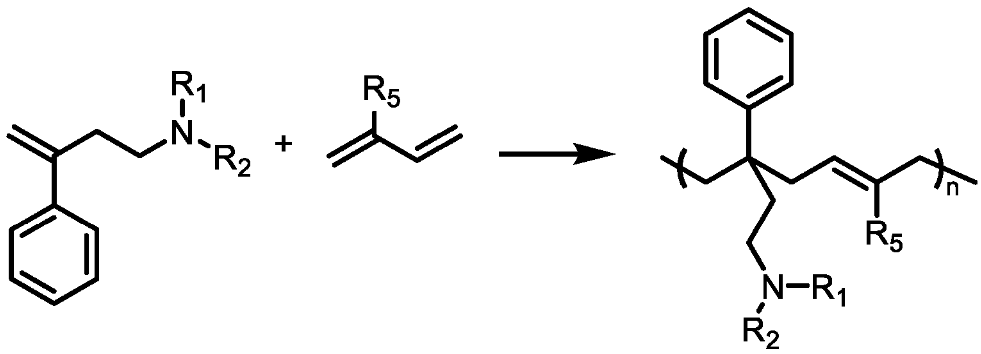

The alternating structures formed as a combination of repeat units of structure (V) with structures (VI), ($VII_a$), ($VII_b$), or a combination thereof, would thereby form larger repeat units of structures (IX), ($X_a$), ($X_b$), or a combination thereof.

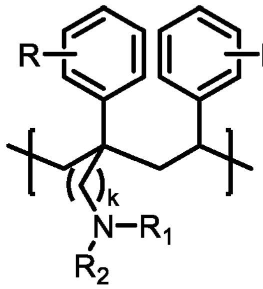 (IX)

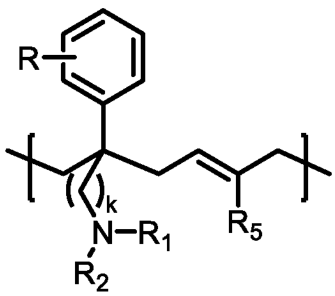 ($X_a$)

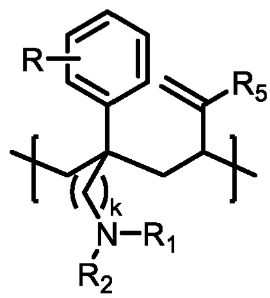 ($X_b$)

Wherein, k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12-membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

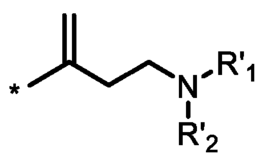 (III)

attached via the asterisk, with $R'_1$ and $R'_2$ being independently the same or different as $R_1$ and $R_2$ but defined identically; $R_5$ is a hydrogen or methyl group; R' is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, and/or combinations thereof.

Additionally, depending on the reactivity ratios of the styrenic monomers including a nitrogen-containing moiety,

other than as pendant to the phenyl ring and the other co-monomers present in the polymerization reaction, and where a molar excess of one or more other co-monomers is present in the polymerization reaction, the polymer may in some cases form a block of repeat units of structures (IX), ($X_a$), ($X_b$), or a combination thereof, followed by a block of repeat units of structures (VI), ($VII_a$), ($VII_b$) or a combination thereof, absent of repeat units of structures (IX), ($X_a$), ($X_b$). For example, the reaction below, wherein $R_1$, $R_2$, and $R_5$ have the same meanings as indicated above.

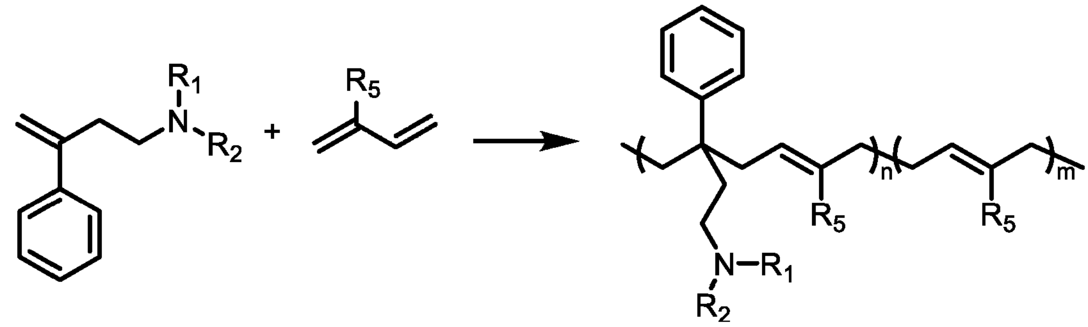

In some embodiments, different monomers, or combinations thereof, may optionally be added to the polymerization reaction sequentially. In such cases, those monomers added later in the reaction may form a block of repeat units within the polymer with a different composition to those repeat units from monomers earlier in the polymerization.

In cases where the polymer contains two blocks of repeat units with different composition, either as a result of differences in the monomer reactivity ratios or from sequential addition of monomers to the polymerization reaction, the polymer is described as a 'diblock'. Similarly, when the polymer contains three, four, five, or six blocks of repeat units of different composition, either as a result of differences in the monomer reactivity ratios or from sequential addition of monomers to the polymerization reaction, the polymers are described as 'triblock', 'tetrablock', 'pentablock', or 'hexablock', respectively.

In some embodiments, the polymer may be coupled using a polyfunctional coupling agent to form a polymer with a star architecture. Many suitable types of these polyfunctional compounds have been described in U.S. Pat. Nos. 3,595,941; 3,468,972, 3,135,716; 3,078,254, and 3,594,452. The polyfunctional coupling agent may optionally be a halogen-substituted or alkoxy-substitued silane, including, tetrachlorosilane, tetramethoxysilane, tetraethoxysilane, bis-trimethoxy-silylethane, bis-triethoxy-silylethane, hexachlorodisiloxane, bis-trichlorosilylethane, 1,6-bis(trichlorosilyl)-hexane, or a combination thereof.

A preferred coupling agent is a polyalkenyl aromatic coupling agent. The most preferred coupling agent is divinyl benzene. Polyalkenyl aromatic coupling agents capable of forming star shaped polymers are known in the art. See generally, Canadian patent number 716,645 and U.S. Pat. Nos. 4,010,226 and 3,985,830. A detailed description of a variety of such coupling agents is found in U.S. Pat. No. 4,391,949. Examples of suitable polyvinyl aromatic compounds are 1,2-divinyl benzene, 1,3-divinylbenzene, 1,4-divinylbenzene, 1,2,4-trivinylbenzene, 1,3-divinylnaphthalene, 1,8-divinylnaphthalene, 1,3,5trivinylnaphthalene, 2,4-divinylbiphenyl, 3,5,4'-trivinylbiphenyl, 1,2-divinyl-3, 4-dimethylbenzene, 1,5,6-trivinyl-3,7-diethylnaphthalene, 1,3-divinyl-4, 5,6-tributyl naphthalene, 2,2'-divinyl-4-ethyl-4'-propylbiphenyl and the like, or a combination thereof.

In cases where a polyfunctional coupling agent is used to couple a polymer to form a polymer star architecture, the coupling ratio (CR) is used to refer to the amount of the polymer that has been crosslinked into a star architecture, meaning the percentage by weight of the polymer in a star architecture relative to the total weight of polymer in the sample. In some embodiments, the inventive functional polymers disclosed herein based on functionalized styrenic monomers including a nitrogen-containing moiety including a star polymer architecture may have a CR greater than 20%, or greater than 30%, or greater than 40%, or greater than 50%, or greater 60%, or greater than 70%, or greater than 80%, or greater than 90%, or greater than 95%.

In some embodiments, the polymerization reaction may be terminated with an epoxide terminating agent, such that the polymer would thereby comprise one or more -OH functional groups at one or more termini of the polymer chain. Non-limiting examples of the epoxide terminating agent include ethylene oxide, propylene oxide, butylene oxide, styrene oxide, methyl glycidyl ether, ethyl glycidyl ether, propyl glycidyl ether, butyl glycidyl ether, benzyl glycidyl ether, phenyl glycidyl ether, and the like, or a combination thereof, of which ethylene oxide and propylene oxide are preferred.

In some embodiments, the inventive functional polymers disclosed herein based on functionalized styrenic monomers including a nitrogen-containing moiety, other than as pendant to the phenyl ring, may have a number average molecular weight, Mn, of greater than 500 Da, or greater than 1000 Da, or greater than 2000 Da, or greater than 5000 Da, or greater than 10,000 Da. Additionally or alternatively, the inventive functional polymers disclosed herein based on functionalized styrenic monomers including a nitrogen-containing moiety, other than as pendant to the phenyl ring,

may have a number average molecular weight, Mn, of less than 5,000,000 Da, or less than 3,000,000 Da, or less than 1,000,000 Da, or less than 500,000 Da, or less than 200,000 Da.

In some embodiments, the inventive functional polymers disclosed herein based on functionalized styrenic monomers including a nitrogen-containing moiety, other than as pendant to the phenyl ring, may contain greater than 0.01 wt%, or greater than 0.05 wt%, or greater than 0.1 wt%, or greater than 0.5 wt%, or greater than 1.0 wt%, or greater than 5.0 wt%, or greater than 10 wt%, or greater than 15 wt%, or greater than 20 wt% of repeat units according to structure (V).

In some embodiments, the inventive functional polymers disclosed herein based on functionalized styrenic monomers including a nitrogen-containing moiety, other than as pendant to the phenyl ring, may contain greater than 0.01 wt%, or greater than 0.05 wt%, or greater than 0.1 wt%, or greater than 0.5 wt%, or greater than 1.0 wt%, or greater than 5.0 wt%, or greater than 10 wt%, or greater than 15 wt%, or greater than 20 wt% of repeat units according to structure (IX).

In some embodiments, the inventive functional polymers disclosed herein based on functionalized styrenic monomers including a nitrogen-containing moiety, other than as pendant to the phenyl ring, may contain greater than 0.01 wt%, or greater than 0.05 wt%, or greater than 0.1 wt%, or greater than 0.5 wt%, or greater than 1.0 wt%, or greater than 5.0 wt%, or greater than 10 wt%, or greater than 15 wt%, or greater than 20 wt% of repeat units according to structure ($X_a$), structure ($X_b$), or a combination thereof.

In some embodiments, the inventive functional polymers disclosed herein based on functionalized styrenic monomers including a nitrogen-containing moiety, other than as pendant to the phenyl ring, may optionally be further subjected to post-polymerization modification in order to modify their structure.

In some embodiments, the post-polymerization modification is hydrogenation. Hydrogenation can be carried out in the process of the present disclosure by known catalysis systems, including heterogeneous systems and soluble systems. Soluble systems are disclosed in U.S. Pat. No. 4,284,835 at column 1, line 65 through column 9, line 16, as well as U.S. Pat. No. 4,980,331 at column 3 line 40 through column 6, line 28.

The hydrogenated copolymers described above may be partially or substantially hydrogenated. In the context of the present disclosure, partially hydrogenated means that from 10% to 90%, or 20% to 80%, or 30% to 70%, or 40% to 60% of the non-aromatic double bonds have been saturated. Substantially hydrogenated means that greater than 90%, or greater than 92%, or greater than 94%, or greater than 96%, or greater than 98%, or greater than 99%, or greater than 99.5%, or greater than 99.9% of the non-aromatic bonds have been saturated.

Additional teachings to hydrogenation may be found in Rachapudy et al., Journal of Polymer Science: Polymer Physics Edition, Vol. 17,1211-1222 (1979). Table 1 of the article discloses several systems including palladium on various supports (calcium carbonate, but also barium sulfide). The Rachapudy et al. article discloses preparation of homogeneous catalysts and heterogeneous catalysts.

Additional teachings to hydrogenation processes and catalysts are disclosed in U.S. Pat. Nos. 4,284,835 and 4,980,331,

In some embodiments, the post-polymerization modification may be a deprotection reaction which removes a cleavable chemical protecting group from the repeat units of structures (V), (VIII), or a combination thereof. A cleavable chemical protecting group means a chemical group which is inert under the polymerization reaction conditions, but can be removed with post-polymerization chemistry to yield a free -NH- or a free -NH2 functional group on the ADAMS repeat unit. In one such form, a preferred cleavable chemical protecting group is a benzyl group and the deprotection reaction is a hydrogenation reaction.

In some embodiments, the post-polymerization modification is a protonation reaction, wherein one or more amine functional groups within repeat units of structures (V), (VIII), or a combination thereof, are converted to their corresponding ammonium salts by treatment with a protic acid. The protic acid may be any acid which is sufficiently strong to protonate a basic nitrogen atom in the repeat units of structures (V), (VIII), or a combination thereof, and thereby form an ammonium salt of the repeat unit with a counterion corresponding to the conjugate base of the protic acid. Non-limiting examples of the protic acid may include hydrochloric acid, hydrobromic acid, hydroiodic acid, various alkyl or aryl sulfonic acids (*i.e.* methylsulfonic acid, ethylsulfonic acid, propylsulfonic acid, n-butylsulfonic acid, tert-butylsulfonic acid, benzenesulfonic acid, p-toluenesulfonic acid, p-dodecylbenzenesulfonic acid, and the like), sulfuric acid, phosphoric acid, formic acid, acetic acid, butyric acid, benzoic acid, triflic acid, nitric acid, or a combination thereof, which would yield ammonium salts with respectively chloride, bromide, iodide, alkyl or aryl sulfonate, sulfate, phosphate, formate, acetate, propionate, butyrate, benzoate, triflate, nitrate counterion, or a combination thereof, counterions.

In some embodiments, the post-polymerization modification is an alkylation reaction, wherein one or more amine functional groups within repeat units of structures (V), (VIII), or a combination thereof, are converted to their corresponding ammonium salts by treatment with an alkylating agent. Non-limiting examples of alkylating agents may include various alkyl halides (*i.e.* bromomethane, iodomethane, bromoethane, iodoethane, bromopropane, iodopropane, benzyl chloride, benzyl bromide, benzyl iodide, and the like), various alkyl sulfonates (*i.e.* methyl tosylate, ethyl tosylate, propyl tosylate, benzyl tosylate, methyl methanesulfonate, ethyl methanesulfonate, propyl methanesulfonate, benzyl methanesulfonate, and the like), various alkly triflates (*i.e.* methyl triflate, ethyl triflate, propyl triflate, and the like), or a combination thereof, which would yield ammonium salts with counterions corresponding to the displaced leaving groups

of the alkylating agent.

**Embodiments Directed to ADAMS Copolymers**

In one form of the invention disclosed herein, copolymer compositions based on amine-derivatized alpha-methyl styrene (ADAMS) monomer (referred to also as ADAMS copolymers) are polymerized via anionic polymerization processing. In particular, in one form the ADAMS copolymers include the following: (a) one or more amine-derivatized alpha-methyl styrene (ADAMS) repeat units according to structure (V):

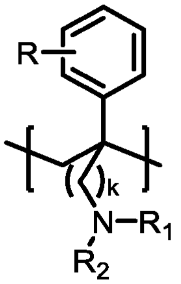
(V)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12-membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

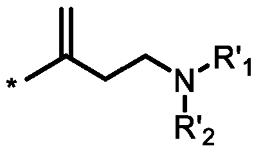
(III)

attached via the asterisk, with $R'_1$ and $R'_2$ being independently the same or different as $R_1$ and $R_2$ but defined identically; and (b) one or more repeat units according to structures (VI), ($VII_a$), ($VII_b$), or combinations thereof

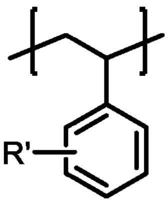
(VI)

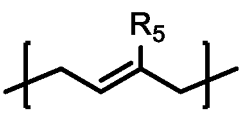
($VII_a$)

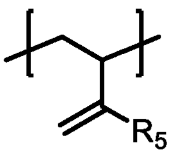
($VII_b$)

wherein: $R_5$ is a hydrogen or methyl group; R' is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, and/or combinations thereof. With regard to the polymeric repeat unit of structure ($VII_a$) above, it may be in the cis-isomer form, the trans-isomer form, or combinations thereof.

In an advantageous form, k = 2 for the ADAMS copolymers described above.

The above copolymers may include one or more ADAMS repeat units according to structure (V), which comprise

the reacted form of the following: 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-di-n-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl)amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, or a combination thereof.

In another form, the ADAMS copolymers described above may be such that the one or more repeat units according to structure (VI) comprise the reacted form of styrene, and the one or more repeat units according to structures ($VII_a$) and ($VII_b$) comprise reacted forms of isoprene, 1,3-butadiene, or a combination thereof. With regard to the polymeric repeat unit of structure ($VII_a$), it may be in the cis-isomer form, the trans-isomer form, or combinations thereof.

Alternatively, the ADAMS copolymers may further include an alkyl residue from a monofunctional alkyl lithium, alkyl sodium, and/or alkyl potassium initiator present at one or more termini of the polymer backbone; or an alkyl residue from a difunctional alkyl lithium, alkyl sodium, and/or alkyl potassium initiator at about a center of the polymer backbone. For the alkyl residues from the monofunctional initiators, such alkyl residues may include methyl, ethyl, n-propyl, isopropyl, n-butyl, iso-butyl, sec-butyl, *tert*-butyl, n-amyl, iso-amyl, sec-amyl, *tert*-amyl, hexyl groups, or combinations thereof. For the alkyl residues from such difunctional initiators may include propyl, butyl, pentyl, hexyl, 1,4-diphenylbutyl groups, or combinations thereof.

Alternatively, the ADAMS copolymers described above may be partially or substantially hydrogenated. Partially hydrogenated means that from 10% to 90%, or 20% to 80%, or 30% to 70%, or 40% to 60% of the non-aromatic double bonds have been saturated. Substantially hydrogenated means that greater than 90%, or greater than 92%, or greater than 94%, or greater than 96%, or greater than 98%, or greater than 99%, or greater than 99.5%, or greater than 99.9% of the non-aromatic bonds have been saturated.

Alternatively, the ADAMS copolymers described above may be such that the one or more repeat units of structure (V) are interspersed within at least one polymer block comprising the one or more repeat units of structures (VI), ($VII_a$), ($VII_b$), or combinations thereof. Still alternatively, the ADAMS copolymers described above may be such that the one or more repeat units of structure (V) may partially or substantially alternate with the one or more repeat units of structures (VI), ($VII_a$), ($VII_b$), or combinations thereof, thereby forming one or more repeat units corresponding to structures (IX), ($X_a$), ($X_b$), or combinations thereof:

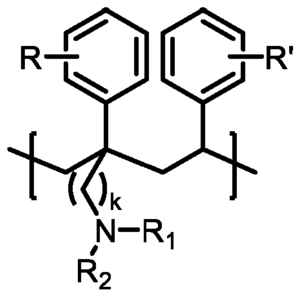

(IX)

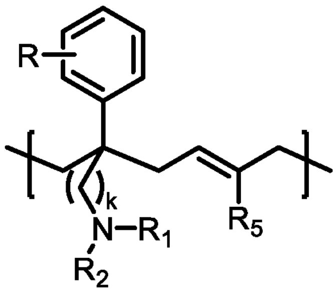

($X_a$)

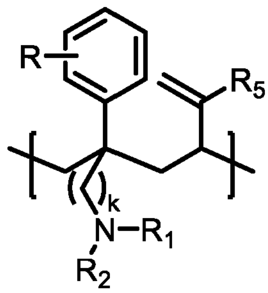

($X_b$)

.

Partially alternate means that from 10% to 90%, or 20% to 80%, or 30% to 70%, or 40% to 60% of the one or more repeat units of structure (V) alternate with the one or more repeat units of structures (VI), ($VII_a$), ($VII_b$), or combinations thereof. Substantially alternate means that greater than 90%, or greater than 92%, or greater than 94%, or greater than 96%, or greater than 98%, or greater than 99%, or greater than 99.5%, or greater than 99.9% of the one or more repeat units of structure (V) alternate with the one or more repeat units of structures (VI), ($VII_a$), ($VII_b$), or combinations thereof. With regard to the polymeric repeat unit of structure ($X_a$), it may be in the cis-isomer form, the trans-isomer form, or combinations thereof.

In still another form, the ADAMS copolymers described above may include one or more polymer blocks comprising one or more repeat units of structures (VI), ($VII_a$), ($VII_b$), or combinations thereof, and not including one or more repeat units according to structure (V). In such a form, the one or more polymer blocks of the copolymer may form a distributed polymer architecture, a diblock, a triblock, a tetrablock, a pentablock, a hexablock, a star polymer architecture, or combinations thereof. A distributed polymer architecture means that repeat units of structure (V) are either randomly or uniformly widely distributed throughout a larger block of non-ADAMS repeat units, which means that greater than 3, or greater than 5, or greater than 10, or greater 15, or greater than 20 repeat units of the non-ADAMS monomer are joined between ADAMS repeat units.

In still another form, the ADAMS copolymers described above may be such that wherein in structure (V), $R_1$, $R_2$, $R'_1$, $R'_2$, or a combination thereof, are cleavable chemical protecting groups. A cleavable chemical protecting group means a chemical group which is inert under the polymerization reaction conditions, but can be removed with post-polymerization chemistry to yield a free -NH- or a free -NH2 functional group on the ADAMS repeat unit. In one such a form, the at least one cleavable chemical protecting group is a benzyl group.

In still another form, the ADAMS copolymers described above may further include one or more -OH, -NH-, or $-NH_2$ functional groups, or a combination thereof, at one or more termini of the copolymer backbone.

In still yet another form, the ADAMS copolymers described above may be such that wherein an amino group in one or more repeat units of structure (V) are protonated or alkylated to their corresponding ammonium salt. In such a form, the protonated or alkylated ammonium salt may include a chloride, bromide, iodide, alkyl or aryl sulfonate, sulfate, phosphate, formate, acetate, propionate, butyrate, benzoate, triflate, nitrate counterion, or a combination thereof.

In particular, in one form the ADAMS copolymers disclosed herein, the ADAMS copolymers include the following: (a) a copolymer comprising the reaction product of: (a) one or more monomers according to structure (I)

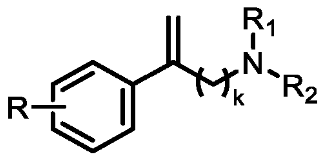

(I)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or

wherein $R_1$ and $R_2$ are connected to form a moiety containing at least one 5- to 12-membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

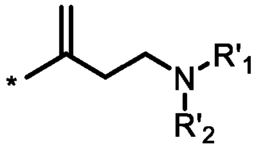 (III)

attached via the asterisk, with $R'_1$ and $R'_2$ being independently the same or different as $R_1$ and $R_2$ but defined identically; (b) isoprene, 1,3-butadiene, styrene, or a combination thereof; and (c) an alkyl lithium, alkyl sodium, alkyl potassium initiator, or a combination thereof.

The above copolymers may include one or more monomers comprising 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-di-n-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl)amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, or a combination thereof.

## Embodiments Directed to ADAMS Homopolymers

In another form of the invention disclosed herein, provided is a polymer comprising: (a) three or more amine-derivatized alpha-methyl styrene (ADAMS) repeat units according to structure (V):

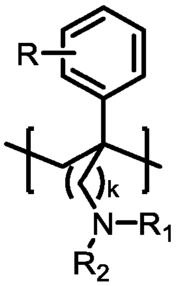

(V)

wherein: k is an integer from 1 to 3; $R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12-membered ring, from 3 to 28 carbons, and optionally 1 to 6 additional heteroatoms selected from the group consisting of O, N, S, P, Se, and combinations thereof; R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second amino-functional group having structure (III)

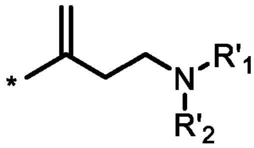

(III)

attached via the asterisk, with $R'_1$ and $R'_2$ being independently the same or different as $R_1$ and $R_2$ but defined identically; and (b) substantially absent of other repeat units. In an advantageous form, k = 2 for the ADAMS homopolymers described above.

The above homopolymer may include three or more ADAMS repeat units according to structure (V), which comprise the reacted form of the following: 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-di-n-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl)amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, or a combination thereof.

Alternatively, the ADAMS homopolymers may further include an alkyl residue from a monofunctional alkyl lithium, alkyl sodium, and/or alkyl potassium initiator present at one or more termini of the polymer backbone; or an alkyl residue from a difunctional alkyl lithium, alkyl sodium, and/or alkyl potassium initiator at about a center of the polymer backbone. For the alkyl residues from the monofunctional initiators, such alkyl residues may include methyl, ethyl, *n*-propyl, isopropyl, *n*-butyl, *iso*-butyl, *sec*-butyl, *tert*-butyl, *n*-amyl, *iso*-amyl, *sec*-amyl, *tert*-amyl, hexyl groups, or combinations thereof. For the alkyl residues from such difunctional initiators may include propyl, butyl, pentyl, hexyl, 1,4-diphenylbutyl groups, or combinations thereof.

Alternatively, the ADAMS homopolymers described above may be partially or substantially hydrogenated. Partially hydrogenated means that from 10% to 90%, or 20% to 80%, or 30% to 70%, or 40% to 60% of the non-aromatic double bonds have been saturated. Substantially hydrogenated means that greater than 90%, or greater than 92%, or greater than 94%, or greater than 96%, or greater than 98%, or greater than 99%, or greater than 99.5%, or greater than 99.9% of the non-aromatic bonds have been saturated.

In still another form, the ADAMS homopolymers described above may be such that wherein in structure (V), $R_1$, $R_2$, $R'_1$, $R'_2$, or a combination thereof, are cleavable chemical protecting groups. A cleavable chemical protecting group means a chemical group which is inert under the polymerization reaction conditions, but can be removed with post-polymerization chemistry to yield a free -NH- or a free -NH2 functional group on the ADAMS repeat unit. In one such a form, the at least one cleavable chemical protecting group is a benzyl group.

In still another form, the ADAMS homopolymers described above may further include one or more -OH, -NH-, or $-NH_2$ functional groups, or a combination thereof, at one or more termini of the polymer backbone.

In still yet another form, the ADAMS homopolymers described above may be such that wherein an amino group in one or more repeat units of structure (V) are protonated or alkylated to their corresponding ammonium salt. In such a form, the protonated or alkylated ammonium salt may include a chloride, bromide, iodide, alkyl or aryl sulfonate, sulfate, phosphate, formate, acetate, propionate, butyrate, benzoate, triflate, nitrate counterion, or a combination thereof.

## Methods of Using the ADAMS Copolymers and Homopolymers

The novel polymers based on anionic polymerization of functionalized styrenic monomers including a nitrogen-containing moiety, other than as pendant to the phenyl ring may be used for a range of different applications. In particular, the inventive functional polymers disclosed herein based on functionalized styrenic monomers including a nitrogen-containing moiety, other than as pendant to the phenyl ring, may be polymerized from addition-polymerizable monomer compositions including amine-derivatized alpha-methyl styrene (ADAMS) monomers according to structure (I) below:

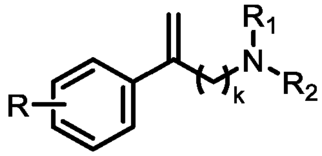
(I)

Wherein k is an integer from 1 to 3, preferably 2; wherein $R_1$ and $R_2$ are each independently a hydrocarbyl group or a hydrocarbonaceous group having 1 to 4 additional heteroatoms, such as O, N, S, P, Se, and combinations thereof, or wherein $R_1$ and $R_2$ are connected to form a moiety containing at least one 5- to 12- membered ring, from 3 to 24 carbons, and optionally 1 to 6 additional heteroatoms (such as O, N, S, P, Se, and combinations thereof); wherein R, in structure (I), is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group (such as a methyl group), a $C_1$-$C_6$ hydrocarbyl group containing 1 to 4 additional heteroatoms (such as O, N, S, P, Se, and combinations thereof), or a second amino-functional group having structure (III)

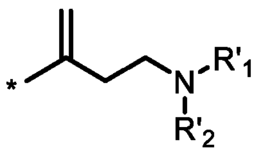
(III)

Attached via the asterisk, with $R'_1$ and $R'_2$ being independently the same or different as $R_1$ and $R_2$ but defined identically; may be used in a diverse range of applications.

In particular, the polymer compositions based on anionic polymerization of functionalized styrenic monomers including a nitrogen-containing moiety, other than as pendant to the phenyl ring, , may be used for variety of applications

including, but not limited to, a lithium-ion battery additive, a plastic additive, a drag reducing agent, a magneto-rheological fluid, an electro-chlorination additive, an industrial coating additive, an adhesive additive, an asphaltene and wax inhibitor, a refinery anti-foulant, an industrial or household surfactant, an agrochemical additive, a ceramic capacitor or indictor additive, an emulsion explosive additive, an anti-microbial coating, a crude transportation and refining additive, and a carbon-capture additive.

**Methods of Making the ADAMS Copolymers and Homopolymers**

The novel polymers of functionalized styrenic monomers including a nitrogen-containing moiety, other than as pendant to the phenyl ring, may be made by anionic polymerization processes.

Anionic polymerization processes which are absent of functionalized styrenic monomers including a nitrogen-containing moiety, other than as pendant to the phenyl ring, are generally known in the art, and are described for example in U.S. Patent Nos. 5,736,612, 5,773,521, 8,604,136, and 9,809,671. Anionic polymerization processes generally comprise at least the following steps:

(a) polymerizing one or more monomers in an inert hydrocarbon solvent in the presence of an alkyl lithium initiator until substantially complete conversion;
(b) optionally adding one or more sequential additions of one or more monomers, of the same or different composition, allowing each sequential addition of said monomers to polymerize until substantially complete conversion;
(c) optionally adding a polyfunctional coupling agent to couple some or all of the polymer or copolymer;
(d) adding a terminating agent.

Anionic polymerizations are generally initiated with alkyl lithium reagents, most frequently with *sec*-butyllithium, although other mono- and di-functional alkyl lithium initiators can be used. [Lintsell, et al., Synthesis and characterization of $\alpha$, $\omega$- and $\alpha$-functionalized hydrogenated polybutadienes: telechelic and semi-telechelic amine and phosophite terminated polymers, Polymer, Vol. 38, Number 11, 2835 (1997)].

The monofunctional initiator which may be used may be an alkyl lithium, alkyl sodium, or alkyl potassium compound, generally in the C2 to C12 range. Alkyl lithium compounds such as methyllithium, ethyllithium, *n*-propyllithium, isopropylithium, *n*-butyllithium, *iso*-butyllithium, *sec*-butyllithium, *tert*-butyllithium, *n*-amyllithium, *iso*-amyllithium, *sec*-amyllithium, *tert*-amyllithium, hexyllithium, or a combination thereof, are preferred. Secondary alkyl lithium compounds, such as *sec*-butyllithium, sec-amyllithium, or a combination thereof, are more preferred. Most preferred is sec-butyllithium. Substituted alkyllithiums may also be used, such as aralkyllithium compounds, for example, benzyllithium, 1-lithioethylbenzene, and 1-lithio-3-methylpentylbenzene.

The difunctional initiator which may be used may be an alkyl dilithium, alkyl disodium, or alkyl dipotassium compound, generally in the C2 to C12 range, such as 1,3-propanediyldilithium, 1,4-butanediyldilithium, 1,5-pentanediyldilithium, 1,6-hexanedilyllithium, or a combination thereof. Additional difunctional initiators are disclosed in U.S. Pat. No. 6,492,469.

The functionalized styrenic monomers including a nitrogen-containing moiety, other than as pendant to the phenyl ring, may be co-polymerized with isoprene, butadiene, styrene, and combinations thereof. Other non-limiting exemplary co-monomers that may be co-polymerized with the functionalized styrenic monomers including a nitrogen-containing moiety, other than as pendant to the phenyl ring, include, various alkyl-substituted styrenes (*i.e.* 2-methylstyrene, 3-methylstyrene, 4-methylstyrene, 4-ethylstyrene, 4-n-butylstyrene, 4-*tert*-butylstyrene, 2,4-dimethylstyrene, 3,5-dimethylstyrene, 2,4,6-trimethylstyrene, 2,4-diethylstyrene, 3,5-diethylstyrene, 2,4-dipropylstyrene, 2-methyl-4-ethylstyrene, 2-methyl-4-propylstyrene, and the like), vinylnaphthalene, vinylpyridine, piperylene, methylpentyldiene. In another form, the functionalized styrenic monomers including a nitrogen-containing moiety, other than as pendant to the phenyl ring, may be homopolymerized, either as an isolable homopolymer or a homopolymer block in a copolymer.

The novel polymers of functionalized styrenic monomers including a nitrogen-containing moiety, other than as pendant to the phenyl ring, may be prepared via anionic polymerization process in which the monomers, or combinations thereof, are polymerized in solution in an inert hydrocarbon solvent in the presence of an alkyl lithium initiator. The inert hydrocarbon solvent may be any hydrocarbon, generally from 5 to 8 carbons, or mixtures thereof, which does not react with the alkyl lithium initiator or the 'living' anionic chain end of the polymer backbone, and offers appropriate solubility characteristics for the product polymer. Non-limiting examples of appropriate solvents are cyclic alkanes, such as cyclopentane, cyclohexane, cycloheptane, and cyclooctane, all of which are relatively non-polar. Other suitable solvents will be known to those skilled in the art and can be selected to perform effectively in a given set of process conditions, with polymerization temperature being one of the major factors taken into consideration.

The polymerization is preferably conducted in the presence of a polar additive that reduces the associations between the ions at the reactive 'living' anionic chain end of the polymer backbone, and thereby promotes polymerization. Non-limiting examples of the polar additives may include various ethers (*i.e.,* dimethyl ether, diethyl ether, tetrahydrofuran,

2-methyl tetrahydrofuran, anisole 1,2-dimethoxyethane, 1,2-diethoxyethane, 1,2-dimethoxybenzene, 1-methoxy-2-(2-methoxyethoxy)ethane, and the like), various amines (*i.e.,* trimethylamine, triethylamine, N,N,N',N'-tetramethyl ethylene diamine, N,N,N',N'',N''-pentamethyl diethylene triamine, and the like), or combinations thereof. Of the above polar additives, ethers are preferred.

Polymerization reaction conditions to prepare the the novel polymers of functionalized styrenic monomers including a nitrogen-containing moiety, other than as pendant to the phenyl ring, are typically similar to those used for anionic polymerizations in general. Depending on the monomers and the reaction solvent, the polymerization reaction may be carried out at a temperature of from about -80 °C. to about 200 °C, alternatively from about -40 °C to about 150 °C, preferably from about 0 °C to about 100 °C, and more preferably, from about 20 °C to about 90 °C. In some examples, the polymerization of the functionalized monomers and copolymerization with other monomers and blocks can be carried out at room temperature, or alternatively from 15 to 70° C., alternatively from 20 to 60° C., alternatively from 25 to 50° C., or combinations of these aforementioned temperatures, or individual temperatures within such ranges.

The polymerization reaction is carried out under a dry, inert atmosphere, preferably nitrogen, and may also be carried out under pressure within the range of from about 0 bar to about 10 bar.

Upon completion of the polymerization reaction, a terminating agent may be added to stop the reaction, and quench the reactive 'living' anionic chain end of the polymer backbone. The polymerization terminating agent can be either various primary or secondary alcohols or an epoxide terminating agent. Non-limiting examples of the various primary or secondary alcohols include methanol, ethanol, isopropanol, 2-ethyl-1-hexanol, and the like, or a combination thereof. Non-limiting examples of the epoxide terminating agent include ethylene oxide, propylene oxide, butylene oxide, styrene oxide, methyl glycidyl ether, ethyl glycidyl ether, propyl glycidyl ether, butyl glycidyl ether, benzyl glycidyl ether, phenyl glycidyl ether, and the like, or a combination thereof. Of the polymerization terminating agents, methanol or isopropanol are preferred, except where one or more -OH functional groups at one or more termini of the polymer chain are desired, in which case, ethylene oxide or propylene oxide are preferred.

The novel polymers of functionalized styrenic monomers including a nitrogen-containing moiety, other than as pendant to the phenyl ring, may optionally be isolated or purified according to various general polymer isolation or purification techniques which are known in the art, for example, pouring the polymerization reaction solution into a poor solvent of the polymer, such as methanol, to solidify the polymers, or pouring the polymerization reaction solution into hot water together with steam to remove the solvent by azeotropy (steam stripping) and drying the resultant product.

Based on the difficulty of preparing and polymerizing these monomers, Applicant has explored other potential structures for functional monomers which are both simpler to manufacture and also polymerize. These functional monomer compositions containing aromatic structures each containing at least one aminic nitrogen are described in commonly owned related U.S. Provisional Application Serial No. 63/483,365 filed on February 6, 2023.

The inventive monomers disclosed in U.S. Provisional Application Serial No. 63/483,365 have, to the best of the Applicant's knowledge, not been previously polymerized.

The invention will now be described by way of non-limiting examples only.

## EXAMPLES

Unless specified otherwise, all reactions are performed in appropriately sized glass containers, equipped with magnetic stirring, and run inside a VAC OMNI-LAM inert atmosphere (*e.g.*, $N_2$) glovebox. The atmosphere in the glovebox was maintained below 10 ppm oxygen and 0.2 ppm moisture.

All monomers used in the anionic polymerizations were purified in order to remove added stabilizers or adventitious moisture by using methods which would be familiar to those having ordinary skill in the art; either by distillation of the monomers, filtration of the monomers through basic aluminum oxide, or a combination of both.

During the polymerization reactions described below, a small quantity of initiator solution is added slowly dropwise to the reaction before the main portion of initiator solution. This 'extra' initiator is immediately consumed by residual stabilizers or adventitious moisture in the solvent or reactants, and the exact volume will be variable based on the efficacy of the monomer purification above. The ADAMS-derived 'living' anion responsible for the polymerization is a strong orange-red colour. Once enough initiator is added for a light-yellow colour to persist in the reaction mixture (indicating a very slight presence of 'living' anion), the reaction is judged to be free of inhibitor/moisture, and the target volume of initiator solution can be added.

Samples of each polymer were purified for analysis by polymer isolation techniques familiar to those skilled in the art, generally by slowly pouring a solution of the crude polymer into a poor solvent of the polymer, such as methanol, to solidify the polymers, followed by extensive drying under vacuum.

Gel permeation chromatography (GPC) samples were prepared on 3.0 - 5.0 ml scale by dissolving a sample of either the crude reaction mixture or the isolated polymer product, in stabilized tetrahydrofuran (THF) targeting a final sample concentration between 1.0 - 5.0 g polymer/ml THF. Samples were filtered through a PALL ACRODISC 0.45 μm PTFE filter, before being analyzed.

GPC was run using an AGILENT 1260 INFINITY II system, equipped with an AGILENT 1260 refractive index detector, and three AGILENT PLGEL 10 μm mixed-B chromatography columns maintained at 35 °C by the GPC column heater. Samples were run using a 50 μL injection volume, using stabilized THF (1.0 ml/min, isocratic) as the mobile phase, and a 45.0 min experiment run time.

GPC data analysis used AGILENT CIRUS GPC/SEC software, version 3.4.2.

The GPC was calibrated using WATERS ACQUITY APC polystyrene (PS) test kit standards between Mn = 266 - 1,760,000 Da. All polymer Mn, Mw, Mz values are reported vs. PS standard, unless specified otherwise.

To prepare the NMR samples, ~50-100 mg of the crude reaction mixture was added to a vial followed by 400 μL of benzene-$d_6$. The vial was sealed, mixed thoroughly until the sample had fully dissolved, and then transferred to an NMR tube. $^1$H NMR spectra (16 scans) were recorded at 300 MHz with Bruker AVANCE™-300 instruments. Samples were prepared in benzene-$d_6$ and chemical shifts (δ) are quoted in parts per million (ppm), referenced to TMS contained in the NMR solvent or, preferably, to the benzene-$d_6$ solvent peak calibrating the solvent singlet to 7.16 ppm.

Example 1

Into a 50 ml reactor was added anhydrous cyclohexane (23.5 ml) and anhydrous unstabilized THF (0.5 ml), followed by 1-(pyrrolidin-1-yl)-3-phenylbut-3-ene (2.0 ml, 9.7 mmol) and isoprene (4.0 ml, 39.9 mmol). The solution was stirred for ~1 min before a solution of 1.4 M sec-butyllithium (0.20 ml, 0.28 mmol) was added in a single portion, affording a bright orange solution.

The reaction was allowed to stir at room temperature and monitored regularly by extracting a ~0.1 ml aliquot of the reaction mixture for $^1$H NMR. After ~6 h, the reaction was judged to be substantially complete, and isopropanol (0.2 ml, 2.6 mmol) was added to quench the reaction.

Example 2

Into a 50 ml reactor was added anhydrous cyclohexane (15.0 ml) and anhydrous unstabilized THF (0.5 ml), followed by 1-(4-methyl-1-piperazinyl)-3-phenylbut-3-ene (1.5 ml, 6.4 mmol) and a solution of 15 wt% 1,3-butadiene in hexane (10.0 ml, 18.9 mmol). The solution was stirred for ~1 min before a solution of 1.4 M sec-butyllithium (0.60 ml, 0.84 mmol) was added in a single portion, affording a bright orange solution.

The reaction was allowed to stir at room temperature and monitored regularly by extracting a ~0.1 ml aliquot of the reaction mixture for $^1$H NMR. After ~2 h, the reaction was judged to be substantially complete, and propylene oxide (0.065 ml, 0.93 mmol) was added to the reaction, which gradually became colorless. The reaction was allowed to stir at ambient temperature for 1h, after which $^1$H NMR indicated the reaction was complete.

Example 3

Into a 50 ml reactor was added anhydrous cyclohexane (23.5 ml) and anhydrous unstabilized THF (0.5 ml), followed by 1-(dibenzylamino)-3-phenylbut-3-ene (1.0 ml, 4.1 mmol) and isoprene (0.5 ml, 5.0 mmol). The solution was stirred for ~1 min before a solution of 1.4 M sec-butyllithium (0.40 ml, 0.56 mmol) was added in a single portion, affording a bright orange solution.

The reaction was allowed to stir at room temperature and monitored regularly by $^1$H NMR (as above), while additional measures of isoprene (0.5 ml each, 5.0 mmol each) were added every 30 min until 3.5 h had elapsed (totalling 4.0 ml of isoprene). Once the additions were complete, the reaction was allowed to stir at room temperature for an additional 1.5 h, after which the reaction was judged to be substantially complete by $^1$H NMR, and isopropanol (0.4 ml, 5.2 mmol) was added to quench the reaction.

Example 4

Into a 50 ml reactor was added anhydrous cyclohexane (23.5 ml) and anhydrous unstabilized THF (0.5 ml), followed by styrene (3.0 ml, 26.2 mmol). The solution was stirred for ~1 min before a solution of 1.4 M sec-butyllithium (0.40 ml, 0.56 mmol) was added in a single portion, affording a bright orange solution.

The reaction was allowed to stir at room temperature and monitored regularly by extracting a ~0.1 ml aliquot of the reaction mixture for $^1$H NMR. After ~1 h, the reaction was judged to be substantially complete, after which 1-(1,2,3,4-tetrahydro-2-isoquinolinyl)-3-phenylbut-3-ene (1.0 ml, 4.1 mmol) and styrene (4.0 ml, 34.99 mmol) were added. The reaction was allowed to mix at room temperature for a further ~3 h. Once $^1$H NMR showed substantially complete consumption of the monomers, an additional measure of 1-(1,2,3,4-tetrahydro-2-isoquinolinyl)-3-phenylbut-3-ene (1.0 ml, 4.1 mmol) and styrene (4.0 ml, 34.99 mmol) were added. The reaction was mixed a further ~3 h, after which $^1$H NMR again showed substantially complete consumption of the monomers, and isopropanol (0.4 ml, 5.2 mmol) was added to

quench the reaction.

Example 5

Into a 50 ml reactor was added anhydrous cyclohexane (23.5 ml) and anhydrous unstabilized THF (0.5 ml), followed by 1-(N-thiomorpholinyl)-3-phenylbut-3-ene (1.0 ml, 4.2 mmol). The solution was stirred for ~1 min before a solution of 1.4 M sec-butyllithium was added dropwise until a very slight orange colour from the lithium anion was persistent (~0.012 ml), after which styrene (0.50 ml, 4.4 mmol) followed by a second measure of 1.4 M sec-butyllithium (0.10 ml, 0.14 mmol) was added in a single portion, affording a bright orange solution.

The reaction was allowed to stir at room temperature and monitored regularly by $^1$H NMR (as above), while additional measures of styrene (0.5 ml each, 4.4 mmol each) were added according to the timing in Table 1 below (totalling 3.0 ml of isoprene over 3 h, 26.2 mmol total). Once the additions were complete, the reaction was allowed to stir at room temperature for an additional 1 h, after which $^1$H NMR showed substantially complete consumption of the remaining monomers.

Isoprene (4.0 ml, 39.9 mmol) was added to the reaction, and mixed at room temperature for a further 2 h, after which $^1$H NMR showed substantially complete consumption of the isoprene. Additional measures of styrene (0.5 ml each, 4.4 mmol each) were added according to the timing in Table 1 below, restarting from 0 min (totalling a further 3.0 ml of isoprene over 3 h, 26.2 mmol total). Once the additions were complete, the reaction was allowed to stir at room temperature overnight, and the reaction quenched with isopropanol (0.10 ml, 1.31 mmol).

Table 1

| Time (min) | Volume | Total |
|---|---|---|
| 0 | 0.5 | 0.5 |
| 30 | 0.5 | 1.0 |
| 60 | 0.5 | 1.5 |
| 90 | 0.5 | 2.0 |
| 120 | 0 | 2.0 |
| 150 | 0.5 | 2.5 |
| 180 | 0.5 | 3.0 |

Example 6

Into a 50 ml reactor was added anhydrous cyclohexane (23.5 ml) and anhydrous unstabilized THF (0.5 ml), followed by 1-(N-morpholinyl)-3-phenylbut-3-ene (3.0 ml, 13.5 mmol) and isoprene (3.0 ml, 30.0 mmol). The solution was stirred for ~1 min before a solution of 1.4 M *sec*-butyllithium was added dropwise until a very slight orange colour from the lithium anion was persistent (~0.1 ml), after which a second measure of 1.4 M sec-butyllithium (0.10 ml, 0.14 mmol) was added in a single portion, affording a bright orange solution.

The reaction was allowed to stir at room temperature and monitored regularly by extracting a ~0.1 ml aliquot of the reaction mixture for $^1$H NMR. After ~6 h, the reaction was judged to be substantially complete, after which divinylbenzene [technical grade, 80%] (0.10 ml, 0.56 mmol) was added to the reaction, affording a dark red solution. The reaction was allowed to mix at room temperature for a further 2 h, after which $^1$H NMR detected no presence of residual divinylbenzene. Isopropanol (0.1 ml, 1.31 mmol) was added to quench the reaction.

Example 7

Into a 50 ml reactor was added anhydrous cyclohexane (23.5 ml) and anhydrous unstabilized THF (0.5 ml), followed by isoprene (3.0 ml, 30.0 mmol). The solution was stirred for ~1 min before a solution of 1.4 M *sec*-butyllithium (0.050 ml, 0.070 mmol) was added in a single portion, affording a bright orange solution.

The reaction was allowed to stir at room temperature and monitored regularly by extracting a ~0.1 ml aliquot of the reaction mixture for $^1$H NMR. After ~1 h, $^1$H NMR showed substantially complete consumption of the isoprene, at which point 1-benzylmethylamino-3-phenylbut-3-ene (1.0 ml, 3.9 mmol) and a further measure of isoprene (2.0 ml, 20.0 mmol) were added to the reaction. The reaction was allowed to mix at room temperature for a further 4 h, after which $^1$H NMR showed substantially complete consumption of the remaining monomers. Divinylbenzene [technical grade, 55%] (0.055 ml, 0.21 mmol) was added to the reaction, affording a dark red solution. The reaction was allowed to mix at room temperature for a further 2 h, after which $^1$H NMR detected no presence of residual divinylbenzene. Isopropanol (0.050 ml, 0.65 mmol) was added to quench the reaction.

Example 8

Into a 250 ml dry glass jar equipped with magnetic stirring was added 200 ml of anhydrous cyclohexane and 4.0 ml of anhydrous tetrahydrofuran, followed by 1.0 ml 1-(N-morpholinyl)-3-phenylbut-3-ene (4.5 mmol) and 36.0 ml isoprene (359.5 mmol). The solution was stirred for ~1 min and a 0.1 ml aliquot of the solution was extracted for $^1$H NMR. A small volume (typically between 0.05 to 0.20 ml) of a 1.12 M sec-butyl lithium solution in cyclohexane was slowly added dropwise to the reaction mixture until the solution turned a persistent light-yellow colour, after which an additional 0.45 ml of the 1.12 M sec-butyl lithium solution (0.50 mmol) was added in one portion.

The reaction was allowed to stir at room temperature and monitored regularly by extracting a ~0.1 ml aliquot of the reaction mixture for $^1$H NMR. When the reaction was judged to be substantially complete by $^1$H NMR, 0.45 ml of isopropanol (5.9 mmol) was added to quench the reaction.

Example 9

The reaction was carried out according to the procedure for Polymer Example 8, except that 2.0 ml of 1-(N-morpholinyl)-3-phenylbut-3-ene (9.0 mmol) and 35.0 ml isoprene (349.5 mmol) were added instead.

Example 10

The reaction was carried out according to the procedure for Polymer Example 8, except that 4.0 ml of 1-(N-morpholinyl)-3-phenylbut-3-ene (18.0 mmol) and 32.0 ml isoprene (319.5 mmol) were added instead.

Example 11

The reaction was carried out according to the procedure for Polymer Example 8, except that 1.0 ml of 1-(4-methyl-1-piperazinyl)-3-phenylbut-3-ene (4.3 mmol) was used instead of 1-(N-morpholinyl)-3-phenylbut-3-ene.

Example 12

The reaction was carried out according to the procedure for Polymer Example 8, except that 2.0 ml of 1-(4-methyl-1-piperazinyl)-3-phenylbut-3-ene (8.6 mmol) was used instead of 1-(N-morpholinyl)-3-phenylbut-3-ene, and 34.0 ml of isoprene (339.5 mmol) was added instead.

Example 13

The reaction was carried out according to the procedure for Polymer Example 8, except that 4.0 ml of 1-(4-methyl-1-piperazinyl)-3-phenylbut-3-ene (17.1 mmol) was used instead of 1-(N-morpholinyl)-3-phenylbut-3-ene, and 32.0 ml of isoprene (319.5 mmol) was added instead.

Example 14

The reaction was carried out according to the procedure for Polymer Example 8, except that 1.0 ml of 1-benzylmethylamino-3-phenylbut-3-ene (3.9 mmol) was used instead of 1-(N-morpholinyl)-3-phenylbut-3-ene, and 35.0 ml of isoprene (349.5 mmol) was added instead.

Example 15

The reaction was carried out according to the procedure for Polymer Example 8, except that 2.0 ml of 1-benzylmethylamino-3-phenylbut-3-ene (7.8 mmol) was used instead of 1-(N-morpholinyl)-3-phenylbut-3-ene, and 35.0 ml of isoprene (349.5 mmol) was added instead.

Example 16

The reaction was carried out according to the procedure for Polymer Example 8, except that 4.2 ml of 1-benzylmethylamino-3-phenylbut-3-ene (16.4 mmol) was used instead of 1-(N-morpholinyl)-3-phenylbut-3-ene, and 30.0 ml of isoprene (299.6 mmol) was added instead.

Example 17

The reaction was carried out according to the procedure for Polymer Example 8, except that 1.0 ml of 1-(N-piperidinyl)-3-phenylbut-3-ene (4.6 mmol) was used instead of 1-(N-morpholinyl)-3-phenylbut-3-ene, and 36.0 ml of isoprene (359.5 mmol) was added instead.

Example 18

The reaction was carried out according to the procedure for Polymer Example 8, except that 2.0 ml of 1-(N-piperidinyl)-3-phenylbut-3-ene (9.1 mmol) was used instead of 1-(N-morpholinyl)-3-phenylbut-3-ene, and 34.0 ml of isoprene (339.5 mmol) was added instead.

Example 19

The reaction was carried out according to the procedure for Polymer Example 8, except that 4.0 ml of 1-(N-piperidinyl)-3-phenylbut-3-ene (18.2 mmol) was used instead of 1-(N-morpholinyl)-3-phenylbut-3-ene, and 32.0 ml of isoprene (319.5 mmol) was added instead.

Example 20

The reaction was carried out according to the procedure for Polymer Example 8, except that 2.0 ml of 1-(N-morpholinyl)-3-phenylbut-3-ene (9.0 mmol), 16.0 ml isoprene (319.5 mmol), and 2.4 ml of 1.12 M sec-butyl lithium (2.7 mmol) were added instead. The reaction was quenched using 2.4 ml of isopropanol (31.4 mmol).

Example 21

The reaction was carried out according to the procedure for Polymer Example 8, except that 4.0 ml of 1-(N-morpholinyl)-3-phenylbut-3-ene (18.0 mmol), 32.0 ml isoprene (319.5 mmol), and 0.15 ml of 1.12 M *sec*-butyl lithium (0.17 mmol) were added instead. The reaction was quenched using 2.4 ml of isopropanol (2.0 mmol).

Example 22

The reaction was carried out according to the procedure for Polymer Example 8, except that 4.0 ml of 1-(N-morpholinyl)-3-phenylbut-3-ene (18.0 mmol), 32.0 ml isoprene (319.5 mmol), and 0.05 ml of 1.12 M *sec*-butyl lithium (0.06 mmol) were added instead. The reaction was quenched using 2.4 ml of isopropanol (0.7 mmol).

Example 23

The reaction was carried out according to the procedure for Polymer Example 8, except that 8.0 ml of 1-(4-methyl-1-piperazinyl)-3-phenylbut-3-ene (34.2 mmol) was used instead of 1-(N-morpholinyl)-3-phenylbut-3-ene, and 26.0 ml of isoprene (259.6 mmol) was added instead.

Example 24

The reaction was carried out according to the procedure for Polymer Example 8, except that 12.0 ml of 1-(4-methyl-1-piperazinyl)-3-phenylbut-3-ene (51.3 mmol) was used instead of 1-(N-morpholinyl)-3-phenylbut-3-ene, and 20.0 ml of isoprene (199.7 mmol) was added instead.

Example 25

The reaction was carried out according to the procedure for Polymer Example 8, except that 16.0 ml of 1-(4-methyl-1-piperazinyl)-3-phenylbut-3-ene (68.4 mmol) was used instead of 1-(N-morpholinyl)-3-phenylbut-3-ene; 14.0 ml of isoprene (139.8 mmol) and 0.56 ml of 1.12 M *sec*-butyl lithium (0.62 mmol) were added instead.

Example 26

The reaction was carried out according to the procedure for Polymer Example 8, except that 2.0 ml of 1-(N-piperidinyl)-3-phenylbut-3-ene (9.1 mmol) was used instead of 1-(N-morpholinyl)-3-phenylbut-3-ene, and 16.0 ml of

isoprene (159.8 mmol) was added instead. Once the initial reaction was judged to be substantially complete by $^1$H NMR, additional portions of 2.0 ml of 1-(N-piperidinyl)-3-phenylbut-3-ene (9.1 mmol) and 16.0 ml of isoprene (159.8 mmol) were added, and the reaction continued until the second stage of the reaction was judged to be complete by $^1$H NMR.

Example 27

The reaction was carried out according to the procedure for Polymer Example 8, except that 1.4 ml of 1-(N-piperidinyl)-3-phenylbut-3-ene (6.4 mmol) was used instead of 1-(N-morpholinyl)-3-phenylbut-3-ene, and 11.0 ml of isoprene (109.8 mmol) was added instead. Once the initial reaction was judged to be substantially complete by $^1$H NMR, additional portions of 1.4 ml of 1-(N-piperidinyl)-3-phenylbut-3-ene (6.4 mmol) and 11.0 ml of isoprene (109.8 mmol) were added, and the reaction continued. Once the second stage of the reaction was judged to be substantially complete by $^1$H NMR, further additional portions of 1.4 ml of 1-(N-piperidinyl)-3-phenylbut-3-ene (6.4 mmol) and 11.0 ml of isoprene (109.8 mmol) were added, and the reaction continued until the third stage of the reaction was judged to be complete by $^1$H NMR.

Example 28

The reaction was carried out according to the procedure for Polymer Example 8, except that 4.0 ml of 1-(N-piperidinyl)-3-phenylbut-3-ene (18.2 mmol) was used instead of 1-(N-morpholinyl)-3-phenylbut-3-ene, and 32.0 ml of isoprene (319.5 mmol) was added instead. Once the initial reaction was judged to be substantially complete by $^1$H NMR, 0.45 ml of technical-grade divinylbenzene (55%, 1.7 mmol) was added, and the reaction continued for a further 1 h before it was quenched.

Example 29

Into a 250 ml dry glass jar equipped with magnetic stirring was added 100 ml of anhydrous cyclohexane and 4.0 ml of anhydrous tetrahydrofuran, followed by 2.1 ml 1-benzylmethylamino-3-phenylbut-3-ene (8.2 mmol) and 100 ml of a 15% 1,3-butadiene solution in hexane (189.1 mmol). The solution was stirred for ~1 min and a 0.1 ml aliquot of the solution was extracted for $^1$H NMR. A small volume (typically between 0.5 to 1.5 ml) of a 1.12 M sec-butyl lithium solution in cyclohexane was slowly added dropwise to the reaction mixture until the solution turned a persistent light-yellow colour, after which an additional 1.0 ml of the 1.12 M sec-butyl lithium solution (1.1 mmol) was added in one portion.

The reaction was allowed to stir at room temperature and monitored regularly by extracting a ~0.1 ml aliquot of the reaction mixture for $^1$H NMR. When the reaction was judged to be substantially complete by $^1$H NMR, 1.0 ml of isopropanol (13.1 mmol) was added to quench the reaction.

Example 30

The reaction was carried out according to the procedure for Polymer Example 8, except that 4.0 ml of 1-benzylmethylamino-3-phenylbut-3-ene (156.6 mmol) was used instead of 1-(N-morpholinyl)-3-phenylbut-3-ene, 26.0 ml of styrene (227.1 mmol) was used instead of isoprene, and 1.0 ml of 1.12 M sec-butyl lithium (1.1 mmol) was added instead.

Example 31

The reaction was carried out according to the procedure for Example 8, except that 4.0 ml of 1-benzylmethylamino-3-phenylbut-3-ene (15.6 mmol) was used instead of 1-(N-morpholinyl)-3-phenylbut-3-ene, and 18.0 ml of isoprene (179.7 mmol) was added instead. Once the initial reaction was judged to be substantially complete by $^1$H NMR, an additional portion of 10.0 ml of styrene (87.3 mmol) was added, and the reaction continued until the second stage of the reaction was judged to be complete by $^1$H NMR.

Example 32

In a 250 ml round bottom flask equipped with magnetic stirring water-cooled condenser, under $N_2$ atmosphere, 6.0 g of the isolated polymer from Example 17 (approx. 3.9 wt% ADAMS repeat units), was dissolved in 80 ml of stabilized tetrahydrofuran. To the solution, 0.14 ml of benzyl bromide (1.2 mmol, 1.1 mol eq. vs. ADAMS repeat units) was added, followed by heating the solution to 65 °C for 3 h. The reaction was allowed to cool, and the polymer solution used directly for the emulsification step without further purification. A small aliquot of the solution was evaporated under reduced pressure for GPC analysis.

Example 33

The sample was prepared according to the procedure in Example 38, except that the isolated polymer from Example 18 (approx. 7.8 wt% ADAMS repeat units) was used instead of that from Example 17, and 0.29 ml of benzyl bromide (2.4 mmol, 1.1 mol eq. vs. ADAMS repeat units) was added instead.

Example 34

The sample was prepared according to the procedure in Example 38, except that the isolated polymer from Example 19 (approx. 15.3 wt% ADAMS repeat units) was used instead of that from Example 17, and 0.56 ml of benzyl bromide (4.7 mmol, 1.1 mol eq. vs. ADAMS repeat units) was added instead.

Example 35

Into a reactor equipped with a water-cooled reflux condenser was added of anhydrous THF (20 ml), a sample of poly(isoprene-*co*-1-(pyrrolidin-1-yl)-3-phenylbut-3-ene) (0.467 g) from Example 1, and benzyl bromide (0.13 g, 0.77 mmol) at ambient temperature. The mixture was heated to reflux (~66°C) for 3h. The mixture was allowed to cool to ambient temperature and the solvent was removed under reduced pressure, affording a dry solid powder which was poorly soluble in THF at ambient temperature (thus unable to be analyzed under standard GPC conditions). $^1$H NMR analysis in methanol-$d_4$ showed the presence of a polymer with a sharp peak at ~3.74 ppm (believed to correspond to the benzylic $CH_2$ protons adjacent to the quaternary ammonium salt).

Example 36

In a pressure reactor, 1.1 g of the isolated polymer from Example 8 was dissolved in 100 ml of cyclohexane followed by addition of 0.2 g of rhodium (I) tris(triphenylphosphine) chloride. The reactor was then sealed and first purged with $N_2$ gas, followed by purging with hydrogen gas. The reaction solution was heated to 140°C under a pressure of 425 psi of hydrogen gas for 4 h, before being cooled and the reactor opened. The residual catalyst was removed by filtering the product solution through a pad activated carbon (NORIT AS5) and CELITE 545, and the polymer solution filtrate was then concentrated under reduced pressure. $^1$H NMR analysis showed a 85% reduction in alkene C-H bonds between 4.0 - 6.0 ppm, when compared to the morpholine group $CH_2$-O peak at ~3.8 ppm.

Example 37 (prophetic example)

Under an inert atmosphere, a 3.0 g sample of the poly(isoprene-*co*-1-(dibenzylamino)-3-phenylbut-3-ene) from Example 3 is dissolved in 20 ml of cyclohexane, after which a solution of 1.0 ml of cobalt neodecanoate-triethyl aluminum (0.0962 mol/L cyclohexane solution) is added as a hydrogenation catalyst. The atmosphere in the reactor is purged with hydrogen gas, and the hydrogenation reaction is performed at a hydrogen pressure of up to 2 MPa and up to 150° C, until hydrogen consumption (monitored by pressure differential in the reactor) has ceased. After cooling and pressure release, an aqueous phosphoric acid solution is added under an air atmosphere. The solution is washed with an excess of aqueous potassium hydroxide solution, then washed with water. The polymer solution may then be concentrated under reduced pressure to obtain the hydrogenated block copolymer.

Example 38 (prophetic example)

Under an inert atmosphere, a 3.0 g sample of the poly(isoprene-*co*-1-benzylmethylamino-3-phenylbut-3-ene) from Example 7 is dissolved in 20 ml of cyclohexane, after which a solution of 1.0 ml of cobalt neodecanoate-triethyl aluminum (0.0962 mol/L cyclohexane solution) is added as a hydrogenation catalyst. The atmosphere in the reactor is purged with hydrogen gas, and the hydrogenation reaction is performed at a hydrogen pressure of up to 2 MPa and up to 150° C, until hydrogen consumption (monitored by pressure differential in the reactor) has ceased. After cooling and pressure release, an aqueous phosphoric acid solution is added under an air atmosphere. The solution is washed with an excess of aqueous potassium hydroxide solution, then washed with water. The polymer solution may then be concentrated under reduced pressure to obtain the hydrogenated block copolymer.

Explanation of data in Table 2:

The amine functional groups present within the functional monomers used in Examples 1 - 31, are known or reasonably believed to interact with the stationary phase in standard GPC chromatography columns, and thereby shift the

polymer retention times measured by chromatography system. As a result, there may be a significant source of error introduced to the molecular weight values reported by GPC (which are based on retention time within the GPC columns). The magnitude of this error may depend on the individual ADAMS monomer structure, the wt% content of the ADAMS repeat unit in the copolymer, the distribution of the ADAMS repeat units within the polymer backbone, or a combination thereof.

As a result of this potential source of error, included below in Table 2 are the calculated target number average molecular weight, Mn, for the polymers produced in Examples 1 - 31. These calculated values are based on the molar ratio between the monomers and the alkyl lithium initiator used in the reaction, according to Equation 1;

$$Mn = \frac{n_{monomer} \times MW_{unit}}{n_{initiator}} \qquad (1)$$

Where, $n_{monomer}$ is the molar amount of the monomer present in the reaction in mol, $n_{initiator}$ is the molar amount of the alkyl lithium initiator present in the reaction in mol, and $MW_{unit}$ is the molecular weight of the polymeric repeat unit (based on the monomers present in the reaction) in Da.

The calculated molecular weights in Table 2, are not corrected for comparison to a polystyrene standard. In cases where reaction monitoring by $^1$H NMR has indicated that the ADAMS monomer forms a predominantly alternating copolymer structure with the comonomer (as evidenced by an approximately 1: 1 molar consumption rate of both monomers by $^1$H NMR monitoring, even where a large molar excess of the comonomer may be present), the alternating ADAMS/comonomer polymer block is described as a separate block from the polymer block comprising the remaining comonomer. (See above). In such cases, the repeat unit within the ADAMS/comonomer block is considered to be the combined alternating structure, as in structures (IX), ($X_a$), and ($X_b$), with no additional comonomer repeat units present in ADAMS/comonomer block. The reported GPC molecular weights in Table 2 are based on samples taken from the polymerization reaction either between subsequent additions of monomers, or of the final product polymer after isolation. As such, both the calculated and measured molecular weights reported in Table 2 are cumulative molecular weights, which show the total polymer molecular weight at the completion of each polymer block sampled. In cases where the monomer reactivity ratios lead to the polymerization of an ADAMS-containing block first (as evidenced by $^1$H NMR monitoring), followed by immediate polymerization of a second block of the remaining comonomer, the ADAMS-containing block cannot be independently isolated, and only the total Mn of both blocks are reported.

In the Table 2, IP refers to isoprene, BD refers to 1,3-butadiene, and STY refers to styrene, PDI refers to the polydispersity index, and CR refers to the star polymer coupling ratio.

Polymer peaks were not visible by GPC for the alkylated ADAMS copolymers in Polymer Examples 32 - 35, due to their strong interactions with the stationary phase of the GPC columns.

Table 2

| Ex. | Architecture | ADAMS monomer | Comonomer | ADAMS wt% | Block # | Block Composition | Calculated total Mn (kDa, uncorrected) | GPC total Mn (kDa, vs. PS standard) | GPC total Mw (kDa, vs. PS standard) | GPC PDI | CR |
|---|---|---|---|---|---|---|---|---|---|---|---|
| 1 | diblock | 1-(pyrrolidin-1-yl)-3-phenylbut-3-ene | Isoprene | 42% | 1 | ADAMS/IP (alternating) | 9.4 | not isolated | | | |
| | | | | | 2 | Isoprene | 16.7 | 8.9 | 15.7 | 1.76 | |
| 2 | diblock (-OH terminal) | 1-(4-methyl-1-piperazinyl)-3-phenylbut-3-ene | 1,3-Butadiene | 59% | 1 | ADAMS/BD (alternating) | 2.2 | not isolated | | | |
| | | | | | 2 | 1,3-Butadiene | 3.0 | 2.8 | 3.1 | 1.11 | |
| 3 | distributed | 1-(dibenzylamino)-3-phenylbut-3-ene | Isoprene | 26% | 1 | ADAMS/IP (random) | 6.7 | 11.1 | 17.6 | 1.59 | |
| 4 | pentablock | 1-(1,2,3,4-tetrahydro-2-isoquinolinyl)-3-phenylbut-3-ene | Styrene | 16% | 1 | Styrene | 4.9 | 5.9 | 6.3 | 1.07 | |
| | | | | | 2 | ADAMS/STY (random) | 7.5 | not isolated | | | |
| | | | | | 3 | Styrene | 13.2 | 17.3 | 24.4 | 1.41 | |
| | | | | | 4 | ADAMS/STY (random) | 15.8 | not isolated | | | |
| | | | | | 5 | Styrene | 21.5 | 19.5 | 26.3 | 1.35 | |
| 5 | triblock | 1-(N-thiomorpholinyl)-3-phenylbut-3-ene | Styrene + Isoprene | 19% | 1 | ADAMS/STY (random) | 26.5 | 31.7 | 36 | 1.14 | |
| | | | | | 2 | Isoprene | 45.9 | 70.5 | 80.1 | 1.14 | |
| | | | | | 3 | ADAMS/STY (random) | 72.4 | 100.1 | 123.7 | 1.24 | |
| 6 | diblock-star | 1-(N-morpholinyl)-3-phenylbut-3-ene | Isoprene | 41% | 1 | ADAMS/IP (alternating) | 27.6 | not isolated | | | |
| | | | | | 2 | Isoprene | 35.6 | 42.2 | 54.4 | 1.29 | |
| | | | | | star | DVB | | 387.7 | 439.4 | 1.13 | 43% |

(continued)

| Ex. | Architecture | ADAMS monomer | Comonomer | ADAMS wt% | Block # | Block Composition | Calculated total Mn (kDa, uncorrected) | GPC total Mn (kDa, vs. PS standard) | GPC total Mw (kDa, vs. PS standard) | GPC PDI | CR |
|---|---|---|---|---|---|---|---|---|---|---|---|
| 7 | triblock-star | 1-benzylmethylamino-3-phenylbut-3-ene | Isoprene | 22% | 1 | Isoprene | 29.1 | 60.2 | 63.6 | 1.06 | |
| | | | | | 2 | ADAMS/IP (alternating) | 46.9 | | not isolated | | |
| | | | | | 3 | Isoprene | 62.5 | 111.6 | 123.7 | 1.11 | |
| | | | | | star | DVB | | 832.7 | 1109.6 | 1.33 | 46% |
| 8 | diblock | 1-(N-morpholinyl)-3-phenylbut-3-ene | Isoprene | 3.8% | 1 | ADAMS/IP (alternating) | 2.5 | | not isolated | | |
| | | | | | 2 | Isoprene | 50.5 | 77.5 | 82.6 | 1.07 | |
| 9 | diblock | 1-(N-morpholinyl)-3-phenylbut-3-ene | Isoprene | 7.6% | 1 | ADAMS/IP (alternating) | 5.1 | | not isolated | | |
| | | | | | 2 | Isoprene | 51.1 | 90.7 | 99.8 | 1.10 | |
| 10 | diblock | 1-(N-morpholinyl)-3-phenylbut-3-ene | Isoprene | 15% | 1 | ADAMS/IP (alternating) | 10.2 | | not isolated | | |
| | | | | | 2 | Isoprene | 51.0 | 100.7 | 122.2 | 1.21 | |
| 11 | diblock | 1-(4-methyl-1-piperazinyl)-3-phenylbut-3-ene | Isoprene | 3.9% | 1 | ADAMS/IP (alternating) | 2.5 | | not isolated | | |
| | | | | | 2 | Isoprene | 50.5 | 86.8 | 92.9 | 1.07 | |
| 12 | diblock | 1-(4-methyl-1-piperazinyl)-3-phenylbut-3-ene | Isoprene | 7.9% | 1 | ADAMS/IP (alternating) | 5.1 | | not isolated | | |
| | | | | | 2 | Isoprene | 49.8 | 90.2 | 97.5 | 1.08 | |
| 13 | diblock | 1-(4-methyl-1-piperazinyl)-3-phenylbut-3-ene | Isoprene | 15% | 1 | ADAMS/IP (alternating) | 10.1 | | not isolated | | |
| | | | | | 2 | Isoprene | 51.0 | 89.6 | 98.3 | 1.10 | |
| 14 | diblock | 1-benzylmethylamino-3-phenylbut-3-ene | Isoprene | 4.0% | 1 | ADAMS/IP (alternating) | 2.5 | | not isolated | | |
| | | | | | 2 | Isoprene | 49.2 | 72.4 | 77.3 | 1.07 | |

(continued)

| Ex. | Architecture | ADAMS monomer | Comonomer | ADAMS wt% | Block # | Block Composition | Calculated total **Mn** (kDa, uncorrected) | GPC total Mn (kDa, vs. PS standard) | GPC total Mw (kDa, vs. PS standard) | GPC PDI | CR |
|---|---|---|---|---|---|---|---|---|---|---|---|
| 15 | diblock | 1-benzylmethylamino-3-phenylbut-3-ene | Isoprene | 7.6% | 1 | ADAMS/IP (alternating) | 4.9 | not isolated | | | |
| | | | | | 2 | Isoprene | 51.1 | 73.3 | 78.9 | 1.08 | |
| 16 | diblock | 1-benzylmethylamino-3-phenylbut-3-ene | Isoprene | 17% | 1 | ADAMS/IP (alternating) | 10.4 | not isolated | | | |
| | | | | | 2 | Isoprene | 48.6 | 65.4 | 71.3 | 1.09 | |
| 17 | diblock | 1-(N-piperidinyl)-3-phenylbut-3-ene | Isoprene | 3.9% | 1 | ADAMS/IP (alternating) | 2.6 | not isolated | | | |
| | | | | | 2 | Isoprene | 50.5 | 79.9 | 86.4 | 1.08 | |
| 18 | diblock | 1-(N-piperidinyl)-3-phenylbut-3-ene | Isoprene | 7.8% | 1 | ADAMS/IP (alternating) | 5.2 | not isolated | | | |
| | | | | | 2 | Isoprene | 49.8 | 74.6 | 80.9 | 1.08 | |
| 19 | diblock | 1-(N-piperidinyl)-3-phenylbut-3-ene | Isoprene | 15% | 1 | ADAMS/IP (alternating) | 10.2 | not isolated | | | |
| | | | | | 2 | Isoprene | 51.0 | 69.0 | 76.9 | 1.11 | |
| 20 | diblock | 1-(N-morpholinyl)-3-phenylbut-3-ene | Isoprene | 15% | 1 | ADAMS/IP (alternating) | 1.0 | not isolated | | | |
| | | | | | 2 | Isoprene | 4.8 | 5.9 | 6.6 | 1.12 | |
| 21 | diblock | 1-(N-morpholinyl)-3-phenylbut-3-ene | Isoprene | 15% | 1 | ADAMS/IP (alternating) | 30.6 | not isolated | | | |
| | | | | | 2 | Isoprene | 152.8 | 249.0 | 279.8 | 1.12 | |
| 22 | diblock | 1-(N-morpholinyl)-3-phenylbut-3-ene | Isoprene | 15% | 1 | ADAMS/IP (alternating) | 91.9 | not isolated | | | |
| | | | | | 2 | Isoprene | 458.6 | 473.0 | 778.1 | 1.65 | |
| 23 | diblock | 1-(4-methyl-1-piperazinyl)-3-phenylbut-3-ene | Isoprene | 31% | 1 | ADAMS/IP (alternating) | 20.2 | not isolated | | | |
| | | | | | 2 | Isoprene | 50.7 | 58.4 | 66.5 | 1.14 | |

(continued)

| Ex. | Architecture | ADAMS monomer | Comonomer | ADAMS wt% | Block # | Block Composition | Calculated total **Mn** (kDa, uncorrected) | GPC total Mn (kDa, vs. PS standard) | GPC total Mw (kDa, vs. PS standard) | GPC PDI | CR |
|---|---|---|---|---|---|---|---|---|---|---|---|
| 24 | diblock | 1-(4-methyl-1-piperazinyl)-3-phenylbut-3-ene | Isoprene | 47% | 1 | ADAMS/IP (alternating) | 30.3 | not isolated | | | |
| | | | | | 2 | Isoprene | 50.4 | 45.9 | 59.9 | 1.31 | |
| 25 | diblock | 1-(4-methyl-1-piperazinyl)-3-phenylbut-3-ene | Isoprene | 62% | 1 | ADAMS/IP (alternating) | 32.5 | not isolated | | | |
| | | | | | 2 | Isoprene | 40.3 | 20.0 | 25.6 | 1.28 | |
| 26 | tetrablock | 1-(N-piperidinyl)-3-phenylbut-3-ene | Isoprene | 15% | 1 | ADAMS/IP (alternating) | 5.1 | not isolated | | | |
| | | | | | 2 | Isoprene | 25.5 | 26.8 | 31.1 | 1.16 | |
| | | | | | 3 | ADAMS/IP (alternating) | 30.6 | not isolated | | | |
| | | | | | 4 | Isoprene | 50.9 | 51.4 | 60.0 | 1.17 | |
| 27 | hexablock | 1-(N-piperidinyl)-3-phenylbut-3-ene | Isoprene | 15% | 1 | ADAMS/IP (alternating) | 3.6 | not isolated | | | |
| | | | | | 2 | Isoprene | 17.6 | 19.0 | 23.0 | 1.21 | |
| | | | | | 3 | ADAMS/IP (alternating) | 21.1 | not isolated | | | |
| | | | | | 4 | Isoprene | 35.1 | 36.5 | 43.4 | 1.19 | |
| | | | | | 5 | ADAMS/IP (alternating) | 38.7 | not isolated | | | |
| | | | | | 6 | Isoprene | 52.7 | 53.4 | 63.8 | 1.19 | |
| 28 | diblock-star | 1-(N-piperidinyl)-3-phenylbut-3-ene | Isoprene | 15% | 1 | ADAMS/IP (alternating) | 10.2 | not isolated | | | |
| | | | | | 2 | Isoprene | 50.9 | 54.4 | 61.2 | 1.13 | |
| | | | | | star | DVB | | 275.3 | 311.7 | 1.13 | 60% |

(continued)

| Ex. | Architecture | ADAMS monomer | Comonomer | ADAMS wt% | Block # | Block Composition | Calculated total **Mn** (kDa, uncorrected) | **GPC total Mn** (kDa, vs. PS standard) | **GPC total Mw** (kDa, vs. PS standard) | GPC PDI | CR |
|---|---|---|---|---|---|---|---|---|---|---|---|
| 29 | diblock | 1-benzylmethylamino-3-phenylbut-3-ene | 1,3-Butadiene | 17% | 1 | ADAMS/BD (alternating) | 2.2 | not isolated | | | |
| | | | | | 2 | 1,3-Butadiene | 11.0 | 9.4 | 10.0 | 1.06 | |
| 30 | diblock | 1-benzylmethylamino-3-phenylbut-3-ene | Styrene | 14% | 1 | ADAMS/STY (random) | 5.0 | not isolated | | | |
| | | | | | 2 | Styrene | 24.6 | 21.9 | 25.8 | 1.18 | |
| 31 | Triblock | 1-benzylmethylamino-3-phenylbut-3-ene | Styrene + Isoprene | 16% | 1 | ADAMS/IP (alternating) | 9.9 | not isolated | | | |
| | | | | | 2 | Isoprene | 32.0 | 37.2 | 40.4 | 1.09 | |
| | | | | | 3 | Styrene | 50.1 | 50.1 | 56.2 | 1.12 | |
| 32 | diblock (alkylated) | 1-(N-piperidinyl)-3-phenylbut-3-ene | Isoprene | 3.9% | 1 | ADAMS/IP (alternating) | 2.6 | not isolated | | | |
| | | | | | 2 | Isoprene | 50.5 | no peaks by GPC | | | |
| 33 | diblock (alkylated) | 1-(N-piperidinyl)-3-phenylbut-3-ene | Isoprene | 7.8% | 1 | ADAMS/IP (alternating) | 5.2 | not isolated | | | |
| | | | | | 2 | Isoprene | 49.8 | no peaks by GPC | | | |
| 34 | diblock (alkylated) | 1-(N-piperidinyl)-3-phenylbut-3-ene | Isoprene | 15% | 1 | ADAMS/IP (alternating) | 10.2 | not isolated | | | |
| | | | | | 2 | Isoprene | 51.0 | no peaks by GPC | | | |
| 35 | diblock (alkylated) | 1-(pyrrolidin-1-yl)-3-phenylbut-3-ene | Isoprene | 42% | 1 | ADAMS/IP (alternating) | 9.4 | not isolated | | | |
| | | | | | 2 | Isoprene | 16.7 | no peaks by GPC | | | |
| 36 | diblock (hydrogenated) | 1-(N-morpholinyl)-3-phenylbut-3-ene | Isoprene | 3.8% | 1 | ADAMS/IP (alternating) | 2.5 | not isolated | | | |
| | | | | | 2 | Isoprene | 50.5 | no peaks by GPC | | | |

As should be apparent from the foregoing general description and the specific embodiments, while forms of the invention have been illustrated and described, various modifications can be made without departing from the spirit and scope of the invention. Accordingly, it is not intended that the invention be limited thereby. The term "comprising" specifies the presence of stated features, steps, integers, or components, but does not preclude the presence or addition of one or more other features, steps, integers, components, or groups thereof. As such, the term "comprising" is considered essentially synonymous with the term "including." Similarly, whenever a composition, an element, or a group of elements is preceded with the transitional phrase "comprising," it should be understood that the same composition or group of elements is contemplated with transitional phrases "consisting essentially of," "consisting of," "selected from the group of consisting of," or "can be","may be","is" preceding the recitation of the composition, element, or elements, and *vice versa.* In juxtaposition to the well-known terms "comprising" meaning "including what follows and anything else" [open] and "consisting of" meaning "including only what follows" [closed], the term "consisting essentially of" should be understood to be semi-inclusive and to mean, in accordance with US judicial interpretation, including that which follows and other things that do not materially affect the basic and novel properties.

Applicants have attempted to disclose all embodiments and applications of the disclosed subject matter that could be reasonably foreseen. However, there may be unforeseeable, insubstantial modifications that remain as equivalents. While the present invention has been described in conjunction with specific, exemplary embodiments thereof, it is evident that many alterations, modifications, and variations will be apparent to those skilled in the art in light of the foregoing description without departing from the scope of the present disclosure. Accordingly, the present disclosure is intended to embrace all such alterations, modifications, and variations of the above detailed description.

When numerical lower limits and numerical upper limits are listed herein, ranges from any lower limit to any upper limit are contemplated.

## Claims

**1.** A copolymer comprising:

(a) one or more amine-derivatized alpha-methyl styrene (ADAMS) repeat units according to structure (V):

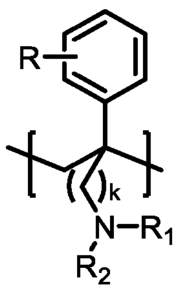

(V)

wherein:

k is an integer from 1 to 3;

$R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof;

R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second aminofunctional group having structure (III)

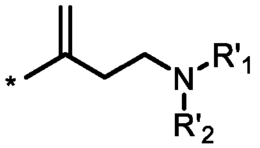 (III)

attached via the asterisk, with $R'_1$ and $R'_2$ being independently the same or different as $R_1$ and $R_2$ but defined identically; and

(b) one or more repeat units according to structures (VI), ($VII_a$), ($VII_b$), or combinations thereof

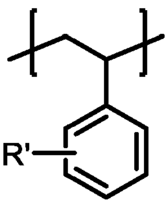 (VI)

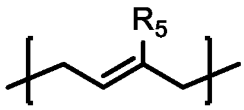 ($VII_a$) 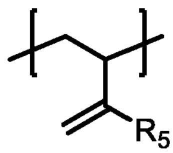 ($VII_b$)

wherein:

$R_5$ is a hydrogen or methyl group;
R' is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, and/or combinations thereof.

**2.** The copolymer of claim 1, wherein k = 2.

**3.** The copolymer of claim 2, wherein the one or more ADAMS repeat units according to structure (V) comprise the reacted form of 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-din-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl) amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, or a combination thereof.

**4.** The copolymer of claims 1-3, wherein the one or more repeat units according to structure (VI) comprise the reacted form of styrene, and the one or more repeat units according to structures ($VII_a$) and ($VII_b$) comprise reacted forms of isoprene, 1,3-butadiene, or a combination thereof.

**5.** The copolymer of claims 1-4, further comprising:
an alkyl residue from a monofunctional alkyl lithium, alkyl sodium, and/or alkyl potassium initiator present at one or more termini of the polymer backbone;
or
an alkyl residue from a difunctional alkyl lithium, alkyl sodium, and/or alkyl potassium initiator at about a center of the polymer backbone.

**6.** The copolymer of claim 5, wherein the alkyl residues from the monofunctional initiators comprise methyl, ethyl, *n*-propyl, isopropyl, *n*-butyl, *iso*-butyl, *sec*-butyl, *tert*-butyl, *n*-amyl, *iso*-amyl, *sec*-amyl, *tert*-amyl, hexyl groups, or combinations thereof or
wherein the alkyl residues from difunctional initiators comprise propyl, butyl, pentyl, hexyl, 1,4-diphenylbutyl groups, or combinations thereof.

**7.** The copolymer of claims 1-6, wherein the copolymer is partially or substantially hydrogenated.

**8.** The copolymer of claims 1-7, wherein the one or more repeat units of structure (V) are interspersed within at least one polymer block comprising the one or more repeat units of structures (VI), ($VII_a$), ($VII_b$), or combinations thereof.

**9.** The copolymer of claim 8, wherein the one or more repeat units of structure (V) partially or substantially alternate with the one or more repeat units of structures (VI), ($VII_a$), ($VII_b$), or combinations thereof, thereby forming one or more repeat units corresponding to structures (IX), ($X_a$), ($X_b$), or combinations thereof:

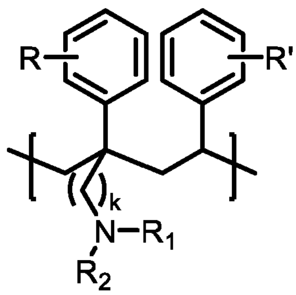

(IX)

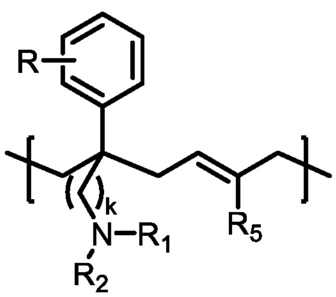

($X_a$)

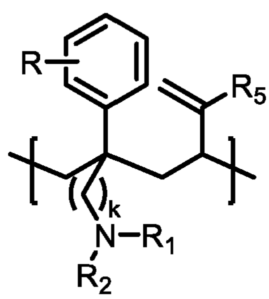

($X_b$)

.

**10.** The copolymer of claim 9, wherein the copolymer comprises one or more polymer blocks comprising one or more repeat units of structures (VI), ($VII_a$), ($VII_b$), or combinations thereof, and not including one or more repeat units according to structure (V).

**11.** The copolymer of claim 10, wherein the one or more polymer blocks of the copolymer form a distributed polymer architecture, a diblock, a triblock, a tetrablock, a pentablock, a hexablock, a star polymer architecture, or combinations thereof.

**12.** The copolymer of claims 1-11, wherein in structure (V), $R_1$, $R_2$, $R'_1$, $R'_2$, or a combination thereof, are cleavable chemical protecting groups.

**13.** The copolymer of claims 1-12, wherein the copolymer further comprises one or more -OH, -NH-, or $-NH_2$ functional groups, or a combination thereof, at one or more termini of the copolymer backbone.

**14.** The copolymer of claims 1-13, wherein an amino group in one or more repeat units of structure (V) are protonated or alkylated to their corresponding ammonium salt.

**15.** A polymer comprising:

(a) three or more amine-derivatized alpha-methyl styrene (ADAMS) repeat units according to structure (V):

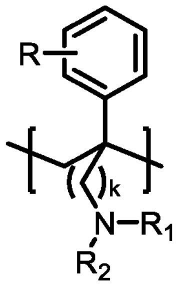

(V)

wherein:

k is an integer from 1 to 3;
$R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof;
R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second aminofunctional group having structure (III)

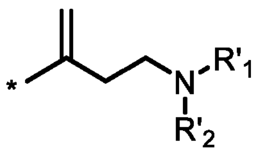

(III)

attached via the asterisk, with $R'_1$ and $R'_2$ being independently the same or different as $R_1$ and $R_2$ but defined identically; and

(b) substantially absent of other repeat units.

**16.** A copolymer comprising the reaction product of:

(a) one or more monomers according to structure (I)

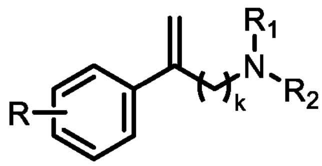 (I)

wherein:

k is an integer from 1 to 3;
$R_1$ and $R_2$ are each independently a hydrocarbyl group or a hydrocarbonaceous group having 1 to 4 additional heteroatoms selected from the group consisting of O, N, S, P, Se, and combinations thereof, or wherein $R_1$ and $R_2$ are connected to form a moiety containing at least one 5- to 12- membered ring, from 3 to 28 carbons, and optionally 1 to 6 additional heteroatoms selected from the group consisting of O, N, S, P, Se, and combinations thereof;
R is hydrogen, a phenyl ring co-attached at two neighboring ring carbon positions with the phenyl ring shown so as to form a naphthalene assembly, a phenyl group attached at a single carbon of the phenyl ring shown, a $C_1$-$C_4$ hydrocarbyl group, a $C_1$-$C_6$ hydrocarbyl group containing 1 to 4 additional heteroatoms selected from the group consisting of O, N, S, P, Se, and combinations thereof, or a second aminofunctional group having structure (III)

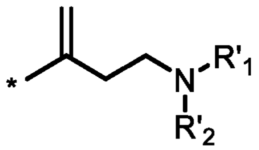 (III)

attached via the asterisk, with $R'_1$ and $R'_2$ being independently the same or different as $R_1$ and $R_2$ but defined identically;
(b) isoprene, 1,3-butadiene, styrene, or a combination thereof; and
(c) an alkyl lithium, alkyl sodium, alkyl potassium initiator, or a combination thereof.

**17.** The copolymer of claim 16, wherein the one or more monomers comprise 1-dimethylamino-3-phenylbut-3-ene, 1-diethylamino-3-phenylbut-3-ene, 1-di-n-propylamino-3-phenylbut-3-ene, 1-diisopropylamino-3-phenylbut-3-ene, 1-di-2-propenylamino-3-phenylbut-3-ene, 1-di-n-butylamino-3-phenylbut-3-ene, 1-di-sec-butylamino-3-phenylbut-3-ene, 1-diisobutylamino-3-phenylbut-3-ene, 1-di-tert-butylamino-3-phenylbut-3-ene, 1-cyclohexylmethylamino-3-phenylbut-3-ene, 1-dicyclohexylamino-3-phenylbut-3-ene, 1-di-(2-ethylhexyl)amino-3-phenylbut-3-ene, 1-di-(methoxyethyl)amino-3-phenylbut-3-ene, 1-di-(ethoxyethyl)amino-3-phenylbut-3-ene, 1-di-(phenoxyethyl)amino-3-phenylbut-3-ene, 1-di-(methylthioethyl)amino-3-phenylbut-3-ene, 1-di-(ethylthioethyl)amino-3-phenylbut-3-ene, 1-benzylmethylamino-3-phenylbut-3-ene, 1-dibenzylamino-3-phenylbut-3-ene, 1-benzylphenylamino-3-phenylbut-3-ene, 1-diphenylamino-3-phenylbut-3-ene, 1-dipyridylamino-3-phenylbut-3-ene, 1-phenylmethylamino-3-phenylbut-3-ene, 1-phenylmethoxyethylamino-3-phenylbut-3-ene, 1-benzylmethoxyethylamino-3-phenylbut-3-ene, 1-(N-morpholinyl)-3-phenylbut-3-ene, 1-(N-thiomorpholinyl)-3-phenylbut-3-ene, 1-(N-piperidinyl)-3-phenylbut-3-ene, 1-(N-piperazinyl)-3-phenylbut-3-ene, 1-(N-diazepanyl)-3-phenylbut-3-ene, 1-(N-pyrrolidinyl)-3-phenylbut-3-ene, 1-(N-pyrrolyl)-3-phenylbut-3-ene, 1-(1,2,3,4-tetrahydro-1-quinolinyl)-3-phenylbut-3-ene, 1-(1,2,3,4-tetrahydro-2-isoquinolinyl)-3-phenylbut-3-ene, 1-(N-indolinyl)-3-phenylbut-3-ene, 1-(N-indolyl)-3-phenylbut-3-ene, 1-(N-carbazolyl)-3-phenylbut-3-ene, 1-(N-phenothiazinyl)-3-phenylbut-3-ene, 1-(N-phenothiazinyl-S-oxide)-3-phenylbut-3-ene, 1-(N-phenothiazinyl-S,S-dioxide)-3-phenylbut-3-ene, 1-(N-phenoxazinyl)-3-phenylbut-3-ene, 1-(4-methyl-1-piperazinyl)-3-phenylbut-3-ene, 1-(5-methyl-2,5-diazabicyclo[2.2.1]heptan-2-yl)-3-phenylbut-3-ene, 1-(5-methyl-2,5-diazabicyclo[2.2.2]octan-2-yl)-3-phenylbut-3-ene, 1-(4-cyclopentyl-1-piperazinyl)-3-phenylbut-3-ene, 1-(4-cyclopentadienyl-1-piperazinyl)-3-phenylbut-3-ene, 1-(4-phenyl-1-piperazinyl)-3-phenylbut-3-ene, 1-(4-(thiazolyl)-1-piperazinyl)-3-phenylbut-3-ene, 1-(4-(thiadiazolyl)-1-piperazinyl)-3-phenylbut-3-ene, 1-(4-(triazolyl)-1-piperazinyl)-3-phenylbut-3-ene, 1-(4-(1,2,3-benzotriazolyl)-1-piperazinyl)-3-phenylbut-3-ene, 1-(N'-methyl-N-diazepanyl)-3-phenylbut-3-ene, N,N'-bis(3-phenylbut-3-enyl)diazepane, N,N'-bis(3-phenylbut-3-enyl)piperazine, N,N'-bis(3-phenylbut-3-enyl)dihydrophenazine, N,N'-bis(3-phenylbut-3-enyl)dihydrobenzoindazole, N,N'-bis(3-phenylbut-3-enyl)dihydropermidine, N,N'-bis(3-phenylbut-3-enyl)octahydropyridoquinoline, N,N'-bis(3-phenylbut-3-enyl)octahydropyridoisoquinoline, N,N'-bis(3-phenylbut-3-enyl)hexahydropyrroloquinoline, N,N'-bis(3-phenylbut-3-enyl)hexahydropyrroloisoquinoline, N,N'-bis(3-phenylbut-3-enyl)hexahydropyrroloisoindole, N,N'-bis(3-phenylbut-3-enyl)diazabicyclo[2.2.1]heptane, N,N'-bis(3-phenylbut-3-enyl)diazabicyclo[2.2.2]octane, 1,3-bis(1-(3-phenylbut-3-enyl)piperidin-4-yl)propane, bis(1-dimethylamino-3-phenylbut-3-enyl)benzene, bis(1-benzylmethylamino-3-phenylbut-3-enyl)benzene, bis(1-(N-morpholinyl)-3-phenylbut-3-enyl)benzene, bis(1-(N-thiomorpholinyl)-3-phenylbut-3-enyl)benzene, bis(1-(di-methoxyethyl)amino-3-phenylbut-3-enyl)benzene, bis(1-(N-piperidinyl)-3-phenylbut-3-enyl)benzene, bis(1-(N-pyrrolidinyl)-3-phenylbut-3-enyl)benzene, bis(1-(4-methyl-1-piperazinyl))-3-phenylbut-3-enyl)benzene, or a combination thereof.

## Patentansprüche

**1.** Copolymer, das folgendes umfasst:

(a) eine oder mehrere sich wiederholenden Einheiten, die von aminderivatisiertem alpha-Methylstyrol (ADAMS) abgeleitet ist/sind, gemäß Struktur (V):

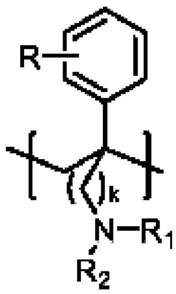

(V)

in der:

k eine ganze Zahl von 1 bis 3 ist,
$R_1$ und $R_2$ jeweils unabhängig eine Kohlenwasserstoffgruppe oder eine kohlenwasserstoffartige Gruppe sind, die 1 bis 4 zusätzliche Heteroatome ausgewählt aus der Gruppe bestehend aus O, N, S, P, Se und Kombinationen davon aufweist, oder wobei $R_1$ und $R_2$ verbunden sind, um einen Anteil zu bilden, der mindestens einen 5- bis 12-gliedrigen Ring, 3 bis 28 Kohlenstoffe und gegebenenfalls 1 bis 6 zusätzliche Heteroatome ausgewählt aus der Gruppe bestehend aus O, N, S, P, Se und Kombinationen davon enthält,
R Wasserstoff, ein Phenylring, der an zwei benachbarten Ringkohlenstoffpositionen mit dem gezeigten Phenylring mitgebunden ist, um so eine Naphthalinanordnung zu bilden, eine Phenylgruppe, die an einen einzelnen Kohlenstoff des gezeigten Phenylrings gebunden ist, eine $C_1$- bis $C_4$-Kohlenwasserstoffgruppe, eine $C_1$- bis $C_6$-Kohlenwasserstoffgruppe, die 1 bis 4 zusätzliche Heteroatome ausgewählt aus der Gruppe bestehend aus O, N, S, P, Se und Kombinationen davon enthält, oder eine zweite aminofunktionale Gruppe ist,die Struktur (III) aufweist:

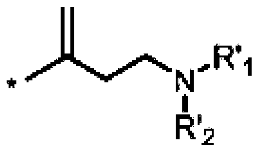

(III)

die über das Sternchen gebunden ist, wobei $R'_1$ und $R'_2$ unabhängig gleich $R_1$ und $R_2$ oder von diesen verschieden sind, jedoch identisch definiert sind, und

(b) eine oder mehrere sich wiederholende Einheiten gemäß den Strukturen (VI), ($VII_a$), ($VII_b$) oder Kombinationen davon,

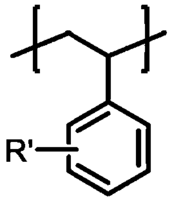 (VI)

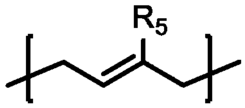 ($VII_a$) 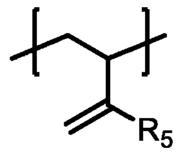 ($VII_b$)

in denen:

$R_5$ Wasserstoff oder eine Methylgruppe ist,

R' Wasserstoff, ein Phenylring, der an zwei benachbarten Ringkohlenstoffpositionen mit dem gezeigten Phenylring mitgebunden ist, um so eine Naphthalinanordnung zu bilden, eine Phenylgruppe, die an einen einzelnen Kohlenstoff des gezeigten Phenylrings gebunden ist, eine $C_1$- bis $C_4$-Kohlenwasserstoffgruppe und/oder Kombinationen davon.

**2.** Copolymer nach Anspruch 1, bei dem k = 2 ist.

**3.** Copolymer nach Anspruch 2, bei dem die eine oder mehreren sich wiederholenden ADAMS-Einheiten gemäß Struktur (V) die umgesetzte Form von 1-Dimethylamino-3-phenylbut-3-en, 1-Diethylamino-3-phenylbut-3-en, 1-Di-n-propylamino-3-phenylbut-3-en, 1-Diisopropylamino-3-phenylbut-3-en, 1-Di-2-propenylamino-3-phenylbut-3-en, 1-Di-n-butylamino-3-phenylbut-3-en, 1-Di-sec-butylamino-3-phenylbut-3-en, 1-Diisobutylamino-3-phenylbut-3-en, 1-Di-tert-butylamino-3-phenylbut-3-en, 1-Cyclohexylmethylamino-3-phenylbut-3-en, 1-Dicyclohexylamino-3-phenylbut-3-en, 1-Di-(2-ethylhexyl)amino-3-phenylbut-3-en, 1-Di-(methoxyethyl)amino-3-phenylbut-3-en, 1-Di(ethoxyethyl)amino-3-phenylbut-3-en, 1-Di(phenoxyethyl)amino-3-phenylbut-3-en, 1-Di(methylthioethyl)amino-3-phenylbut-3-en, 1-Di(ethylthioethyl)amino-3-phenylbut-3-en, 1-Benzylmethylamino-3-phenylbut-3-en, 1-Dibenzylamino-3-phenylbut-3-en, 1-Benzylphenylamino-3-phenylbut-3-en, 1-Diphenylamino-3-phenylbut-3-en, 1-Dipyridylamino-3phenylbut-3-en, 1-Phenylmethylamino-3-phenylbut-3-en, 1-Phenylmethoxyethylamino-3-phenylbut-3-en, 1-Benzylmethoxyethylamino-3-phenylbut-3-en, 1-(N-Morpholinyl)-3-phenylbut-3-en, 1-(N-Thiomorpholinyl)-3-phenylbut-3-en, 1-(NPiperidinyl)-3-phenylbut-3-en, 1-(N-Piperazinyl)-3-phenylbut-3-en, 1-(N-Diazepanyl)-3-phenylbut-3-en, 1-(N-Pyrrolidinyl)-3-phenylbut-3-en, 1-(N-Pyrrolyl)-3-phenylbut-3-en, 1-(1,2,3,4-Tetrahydro-1-chinolinyl)-3-phenylbut-3-en, 1-(1,2,3,4-Tetrahydro-2-isochinolinyl)-3-phenylbut-3-en, 1-(N-Indolinyl)-3-phenylbut-3-en, 1-(N-Indolyl)-3-phenylbut-3-en, 1-(N-Carbazolyl)-3-phenylbut-3-en, 1-(N-Phenothiazinyl)-3-phenylbut-3-en, 1-(N-Phenothiazinyl-S-oxid)-3-phenylbut-3-en, 1-(N-Phenothiazinyl-S,S-dioxid)-3-phenylbut-3-en, 1-(N-Phenoxazinyl)-3-phenylbut-3en, 1-(4-Methyl-1-piperazinyl)-3-phenylbut-3-en, 1-(5-Methyl-2,5-diazabicyclo[2.2.1]heptan-2-yl)-3-phenylbut-3-en, 1-(5-Methyl-2,5-diazabicyclo[2.2.2]octan-2-yl)-3-phenylbut-3-en, 1-(4-Cyclopentyl-1-piperazinyl)-3-phenylbut-3-en, 1-(4-Cyclopentadienyl-1-piperazinyl)-3-phenylbut-3-en, 1-(4-Phenyl-1-piperazinyl)-3-phenylbut-3-en, 1-(4-(Thiazolyl)-1-piperazinyl)-3-phenylbut-3-en, 1-(4-(Thiadiazolyl)-1-piperazinyl)-3-phenylbut-3-en, 1-(4-(Triazolyl)-1-piperazinyl)-3-phenylbut-3-en, 1-(4-(1,2,3-Benzotriazolyl)-1-piperazinyl)-3-phenylbut-3-en, 1-(N'-Methyl-N-diazepanyl)-3-phenylbut-3-en, N,N'-Bis(3-phenylbut-3-enyl)diazepan, N,N'-Bis(3-phenylbut-3-enyl)piperazin, N,N'-Bis(3-phenylbut-3-enyl)dihydrophenazin, N,N'-Bis(3-phenylbut-3-enyl)dihydrobenzoindazol, N,N'-Bis(3-phenylbut-3-enyl)dihydropermidin, N,N'-Bis(3-phenylbut-3-enyl)octahydropyridochinolin, N,N'-Bis(3-phenylbut-3-enyl)octahydropyridoisochinolin, N,N'-Bis(3-phenylbut-3-enyl)hexahydropyrrolochinolin, N,N'-Bis(3-phenylbut-3-enyl)hexahydropyrroloisochinolin, N,N'-Bis(3-phenylbut-3-enyl)hexahydropyrroloisoindol, N,N'-Bis(3-phenylbut-3-enyl)diazabicyclo[2.2.1]heptan, N,N'-Bis(3-phenylbut-3-e-nyl)diazabicyclo[2.2.2]octan, 1,3-Bis(1-(3-phenylbut-3-enyl)piperidin-4-yl)propan, Bis(1-dimethylamino-3-phenylbut-3-enyl)benzol, Bis(1-benzylmethylamino-3-phenylbut-3-enyl)benzol, Bis(1-(N-morpholinyl)-3-phenylbut-3-enyl)benzol, Bis(1-(N-thiomorpholinyl)-3-phenylbut-3-enyl)benzol, Bis(1-(di-methoxyethyl)-amino-3-phenylbut-3-enyl)benzol, Bis(1-(N-piperidinyl)-3-phenylbut-3-enyl)benzol, Bis(1-(N-pyrrolidinyl)-3-phenylbut-3-enyl)benzol, Bis(1-(4-methyl-1-piperazinyl))-3-Phenylbut-3-enyl)benzol oder eine Kombination davon umfasst/umfassen.

**4.** Copolymer nach den Ansprüchen 1 bis 3, bei dem die eine oder mehreren sich wiederholenden Einheiten gemäß Struktur (VI) die umgesetzte Form von Styrol umfassen, und die eine oder mehreren sich wiederholenden Einheiten gemäß der Struktur ($VII_a$) und ($VII_b$) die umgesetzten Formen von Isopren, 1,3-Butadien oder eine Kombination davon umfassen.

**5.** Copolymer nach den Ansprüchen 1 bis 4, das ferner folgendes umfasst:
einen Alkylrest aus einem monofunktionellen Alkyllithium-, Alkylnatrium- und/oder Alkylkaliuminitiator, der an einem oder mehreren Enden des Polymergrundgerüsts vorhanden ist, oder
einen Alkylrest aus einem difunktionellen Alkyllithium-, Alkylnatrium- und/oder Alkylkaliuminitiator an ungefähr einer Mitte des Polymergrundgerüsts.

**6.** Copolymer nach Anspruch 5, bei dem die Alkylreste aus den monofunktionellen Initiatoren Methyl, Ethyl, n-Propyl, Isopropyl, n-Butyl, Isobutyl, sec-Butyl, tert-Butyl, n-Amyl, Isoamyl, sec-Amyl, tert-Amyl, Hexylgruppen und Kombinationen davon umfassen, oder
wobei die Alkylreste aus den difunktionellen Initiatoren Propyl-, Butyl-, Pentyl-, Hexyl-, 1,4-Diphenylbutylgruppen oder Kombinationen davon umfassen.

**7.** Copolymer nach den Ansprüchen 1 bis 6, bei dem das Copolymer teilweise oder im Wesentlichen hydriert ist.

**8.** Copolymer nach den Ansprüchen 1 bis 7, bei dem mindestens ein Polymerblock, der die eine oder mehreren sich wiederholenden Einheiten der Strukturen (VI), ($VII_a$), ($VII_b$) oder Kombinationen davon umfasst, mit der einen oder den mehreren sich wiederholenden Einheiten der Struktur (V) durchsetzt ist.

**9.** Copolymer nach Anspruch 8, bei dem die eine oder mehreren sich wiederholenden Einheiten von Struktur (V) teilweise oder im Wesentlichen mit der einen oder den mehreren sich wiederholenden Einheiten der Strukturen (VI), ($VII_a$), ($VII_b$) oder Kombinationen davon alternieren, wodurch eine oder mehrere sich wiederholende Einheiten gebildet wird/werden, die Strukturen (IX), ($X_a$), ($X_b$) oder Kombinationen davon entspricht/entsprechen:

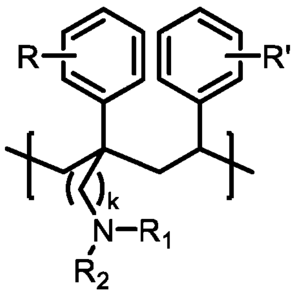
(IX)

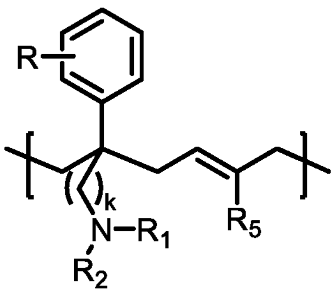
($X_a$)

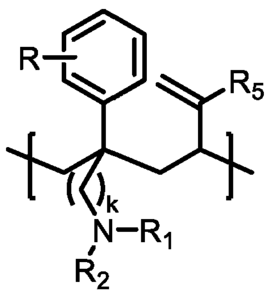
($X_b$)

**10.** Copolymer nach Anspruch 9, bei dem das Copolymer ein oder mehrere Polymerblöcke umfasst, die eine oder mehrere sich wiederholende Einheiten der Strukturen (VI), ($VII_a$), ($VII_b$) oder Kombinationen davon umfassen und nicht eine oder mehrere sich wiederholende Einheiten gemäß Struktur (V) einschließen.

**11.** Copolymer nach Anspruch 10, bei dem der eine oder die mehreren Polymerblöcke des Copolymers eine verteilte Polymerarchitektur, einen Diblock, einen Triblock, einen Tetrablock, einen Pentablock, einen Hexablock, eine Sternpolymerarchitektur oder Kombinationen davon bilden.

**12.** Copolymer nach den Ansprüchen 1 bis 11, bei dem in Struktur (V) $R_1$, $R_2$, $R'_1$, $R'_2$ oder eine Kombination davon

spaltbare chemische Schutzgruppen sind.

**13.** Copolymer nach den Ansprüchen 1 bis 12, bei dem das Copolymer ferner eine oder mehrere funktionelle Gruppen -OH, -NH- oder $-NH_2$ oder eine Kombination davon an einem oder mehreren Enden des Copolymergrundgerüsts umfasst.

**14.** Copolymer nach den Ansprüchen 1 bis 13, bei dem eine Aminogruppe in einer oder mehreren sich wiederholenden Einheiten der Struktur (V) zu ihrem entsprechenden Ammoniumsalz protoniert oder alkyliert ist.

**15.** Polymer, das folgendes umfasst:

(a) drei oder mehr sich wiederholende Einheiten, die von aminderivatisiertem alpha-Methylstyrol (ADAMS) abgeleitet sind, gemäß Struktur (V):

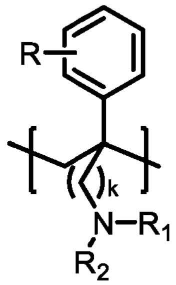

in der:

k eine ganze Zahl von 1 bis 3 ist,
$R_1$ und $R_2$ jeweils unabhängig eine Kohlenwasserstoffgruppe oder eine kohlenwasserstoffartige Gruppe sind, die 1 bis 4 zusätzliche Heteroatome ausgewählt aus der Gruppe bestehend aus O, N, S, P, Se und Kombinationen davon aufweist, oder wobei $R_1$ und $R_2$ verbunden sind, um einen Anteil zu bilden, der mindestens einen 5- bis 12-gliedrigen Ring, 3 bis 28 Kohlenstoffe und gegebenenfalls 1 bis 6 zusätzliche Heteroatome ausgewählt aus der Gruppe bestehend aus O, N, S, P, Se und Kombinationen davon enthält,
R Wasserstoff, ein Phenylring, der an zwei benachbarten Ringkohlenstoffpositionen mit dem gezeigten Phenylring mitgebunden ist, um so eine Naphthalinanordnung zu bilden, eine Phenylgruppe, die an einen einzelnen Kohlenstoff des gezeigten Phenylrings gebunden ist, eine $C_1$- bis $C_4$-Kohlenwasserstoffgruppe, eine $C_1$- bis $C_6$ Kohlenwasserstoffgruppe, die 1 bis 4 zusätzliche Heteroatome ausgewählt aus der Gruppe bestehend aus O, N, S, P, Se und Kombinationen davon enthält, oder eine zweite aminofunktionale Gruppe ist, die Struktur (III) aufweist:

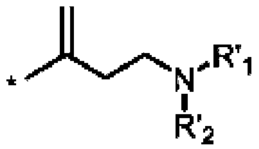
(III)

die über das Sternchen gebunden ist, wobei $R'_1$ und $R'_2$ unabhängig gleich $R_1$ und $R_2$ oder von diesen verschieden sind, jedoch identisch definiert sind, und

(b) wobei andere sich wiederholende Einheiten im Wesentlichen fehlen.

**16.** Copolymer, welches das Reaktionsprodukt von folgenden umfasst:

(a) einem oder mehreren Monomeren gemäß Struktur (I):

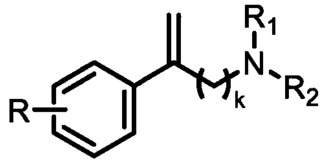

(I)

in der:

k eine ganze Zahl von 1 bis 3 ist,
$R_1$ und $R_2$ jeweils unabhängig eine Kohlenwasserstoffgruppe oder eine kohlenwasserstoffartige Gruppe sind, die 1 bis 4 zusätzliche Heteroatome ausgewählt aus der Gruppe bestehend aus O, N, S, P, Se und Kombinationen davon aufweisen, oder wobei $R_1$ und $R_2$ verbunden sind, um einen Anteil zu bilden, der mindestens einen 5- bis 12-gliedrigen Ring, 3 bis 28 Kohlenstoffe und gegebenenfalls 1 bis 6 zusätzliche Heteroatome ausgewählt aus der Gruppe bestehend aus O, N, S, P, Se und Kombinationen davon enthält,
R Wasserstoff, ein Phenylring, der an zwei benachbarten Ringkohlenstoffpositionen mit dem gezeigten Phenylring mitgebunden ist, um so eine Naphthalinanordnung zu bilden, eine Phenylgruppe, die an einen einzelnen Kohlenstoff des gezeigten Phenylrings gebunden ist, eine $C_1$- bis $C_4$-Kohlenwasserstoffgruppe, eine $C_1$- bis $C_6$ Kohlenwasserstoffgruppe, die 1 bis 4 zusätzliche Heteroatome ausgewählt aus der Gruppe bestehend aus O, N, S, P, Se und Kombinationen davon enthält, oder eine zweite aminofunktionale Gruppe ist, die Struktur (III)aufweist:

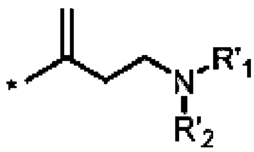

(III)

die über das Sternchen gebunden ist, wobei $R'_1$ und $R'_2$ unabhängig gleich $R_1$ und $R_2$ oder von diesen verschieden sind, jedoch identisch definiert sind,

(b) Isopren, 1,3-Butadien, Styrol oder eine Kombination davon, und
(c) einem Alkyllithium-, Alkylnatrium-, Alkylkaliuminitiator oder einer Kombination davon.

**17.** Copolymer nach Anspruch 16, bei dem das eine oder die mehreren Alkenmonomere 1-Dimethylamino-3-phenylbut-3-en, 1-Diethylamino-3-phenylbut-3-en, 1-Di-n-propylamino-3-phenylbut-3-en, 1-Diisopropylamino-3-phenylbut-3-en, 1-Di-2-propenylamino-3-phenylbut-3-en, 1-Di-n-butylamino-3-phenylbut-3-en, 1-Di-sec-butylamino-3-phenylbut-3-en, 1-Diisobutylamino-3-phenylbut-3-en, 1-Di-tert-butylamino-3-phenylbut-3-en, 1-Cyclohexylmethylamino-3-phenylbut-3-en, 1-Dicyclohexylamino-3-phenylbut-3-en, 1-Di-(2-ethylhexyl)amino-3-phenylbut-3-en, 1-Di-(methoxyethyl)amino-3-phenylbut-3-en, 1-Di-(ethoxyethyl)amino-3-phenylbut-3-en, 1-Di-(phenoxyethyl)amino-3-phenylbut-3-en, 1-Di-(methylthioethyl)amino-3-phenylbut-3-en, 1-Di-(ethylthioethyl)amino-3-phenylbut-3-en, 1-Benzylmethylamino-3-phenylbut-3-en, 1-Dibenzylamino-3-phenylbut-3-en, 1-Benzylphenylamino-3-phenylbut-3-en, 1-Diphenylamino-3-phenylbut-3-en, 1-Dipyridylamino-3-phenylbut-3-en, 1-Phenylmethylamino-3-phenylbut 3-en, 1 -Phenylmethoxyethylamino-3-phenylbut-3-en, 1-Benzylmethoxyethylamino-3-phenylbut-3-en, 1-(N-Morpholinyl)-3-phenylbut-3-en, 1-(N-Thiomorpholinyl)-3-phenylbut-3-en, 1-(N-Piperidinyl)-3-phenylbut-3-en, 1-(N-Piperazinyl)-3-phenylbut-3-en, 1-(N-Diazepanyl)-3-phenylbut-3-en, 1-(N-Pyrrolidinyl)-3-phenylbut-3-en, 1-(N-Pyrrolyl)-3-phenylbut-3-en, 1-(1,2,3,4-Tetrahydro-1-chinolinyl)-3-phenylbut-3-en, 1-(1,2,3,4-Tetrahydro-2-isochinolinyl)-3-phenylbut-3-en, 1-(N-Indolinyl)-3-phenylbut-3-en, 1-(N-Carbazolyl)-3-phenylbut-3-en, 1-(N-Phenothiazinyl)-3-phenylbut-3-en, 1-(N-Phenothiazinyl-S-oxid)-3-phenylbut-3-en, 1-(N-Phenothiazinyl-S,S-dioxid)-3-phenylbut-3-en, 1-(N-Phenoxazinyl)-3-phenylbut-3-en, 1-(4-Methyl-1-piperazinyl)-3-phenylbut-3-en, 1-(5-Methyl-2,5-diazabicyclo[2.2.1]heptan-2-yl)-3-phenylbut-3-en, 1-(5-Methyl-2,5-diazabicyclo[2.2.2]octan-2-yl)-3-phenylbut-3-en, 1-(4-Cyclopentyl-1-piperazinyl)-3-phenylbut-3-en, 1-(4-Cyclopentadienyl-1-piperazinyl)-3-phenylbut-3-en, 1-(4-Phenyl-1-piperazinyl)-3-phenylbut-3-en, 1-(4-(Thiazolyl)-1-piperazinyl)-3-phenylbut-3-en, 1-(4-(Thiadiazolyl)-1-piperazinyl)-3-phenylbut-3-en, 1-(4-(Triazolyl)-1-piperazinyl)-3-phenylbut-3-en, 1-(4-(1,2,3-Benzotriazolyl)-1-piperazinyl)-3-phenylbut-3-en, 1-(N'-Methyl-N-diazepanyl)-3-phenylbut-3-en, N,N'-Bis(3-phenylbut-3-enyl)diazepan, N,N'-Bis(3-phenylbut-3-enyl)piperazin, N,N'-Bis(3-Phenylbut-3-enyl)dihydrophenazin, N,N'-Bis(3-phenylbut-3-enyl)dihydrobenzoindazol, N,N'-Bis(3-phenylbut-3-enyl)dihydropermidin, N,N'-Bis(3-phenylbut-3-enyl)octahydropyridochinolin, N,N'-Bis(3-phenylbut-3-enyl)octahydropyridoisochinolin, N,N'-Bis(3-phenylbut-3-enyl)hexahydropyrrolochinolin, N,N'-Bis(3-phenylbut-3-enyl)hexahydropyrroloisochinolin, N,N'-Bis(3-phenylbut-3-enyl)hexahydropyrroloisoindol, N,N'-Bis(3-phenylbut-3-enyl)diazabicyclo[2.2.1]heptan, N,N'-Bis(3-phenylbut-3-enyl)diazabicyclo[2.2.2]-octan, 1,3-Bis(1-(3-phenylbut-3-enyl)piperidin-4-yl)propan, Bis(1-dimethylamino-3-phenylbut-3-enyl)benzol, Bis(1-benzylmethylamino-3-phenylbut-3-enyl)benzol, Bis(1-(N-morpholinyl)-3-phenylbut-3-enyl)benzol, Bis(1-(N-thiomorpholinyl)-3-phenylbut-3-enyl)benzol, Bis(1-(di-methoxyethyl)amino-3-phenylbut-3-enyl)benzol, Bis(1-(N-piperidinyl)-3-phenylbut-3-enyl)benzol, Bis(1-(N-pyrrolidinyl)-3-phenylbut-3-enyl)benzol, Bis(1-(4-methyl-1-piperazinyl))-3-phenylbut-3-e-nyl)benzol oder eine Kombination davon umfasst/umfassen.

## Revendications

**1.** Copolymère comportant :

(a) une ou plusieurs unités de répétition d'alpha-méthylstyrène dérivé d'amine (ADAMS) selon la structure (V) :

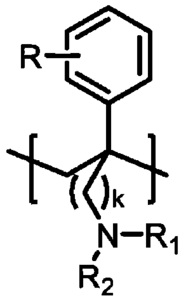

(V)

dans lequel :

k est un nombre entier de 1 à 3 ;
$R_1$ et $R_2$ sont chacun indépendamment un groupe hydrocarbyle ou un groupe hydrocarboné ayant 1 à 4 hétéroatomes supplémentaires sélectionnés dans le groupe consistant en O, N, S, P, Se et des combinaisons de ceux-ci, ou dans lequel $R_1$ et $R_2$ sont reliés pour former une fraction contenant au moins un cycle à 5 à 12 chaînons, de 3 à 28 carbones, et facultativement 1 à 6 hétéroatomes supplémentaires sélectionnés dans le groupe consistant en O, N, S, P, Se et des combinaisons de ceux-ci ;
R est hydrogène, un cycle phényle co-fixé à deux positions de carbone de cycle voisines avec le cycle phényle représenté de manière à former un ensemble naphtalène, un groupe phényle fixé à un seul carbone du cycle phényle représenté, un groupe hydrocarbyle en $C_1$-$C_4$, un groupe hydrocarbyle en $C_1$-$C_6$ contenant 1 à 4 hétéroatomes supplémentaires sélectionnés dans le groupe consistant en O, N, S, P, Se et des combinaisons de ceux-ci, ou un deuxième groupe fonctionnel amino de structure (III)

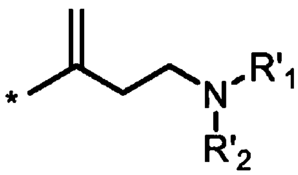

(III)

fixé par l'astérisque, $R'_1$ et $R'_2$ étant indépendamment identiques ou différents de $R_1$ et $R_2$ mais définis de manière identique ; et

(b) une ou plusieurs unités de répétition selon des structures (VI), ($VII_a$), ($VII_b$) ou des combinaisons de celles-ci

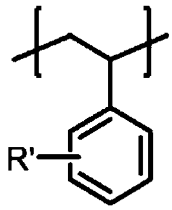

(VI)

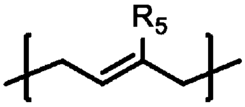 (VII$_a$) 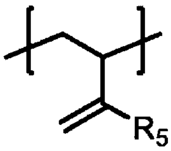 (VII$_b$)

dans lequel :

$R_5$ est un hydrogène ou un groupe méthyle ;
R' est hydrogène, un cycle phényle co-fixé à deux positions de carbone de cycle voisines avec le cycle phényle représenté de manière à former un ensemble naphtalène, un groupe phényle fixé à un seul carbone du cycle phényle représenté, un groupe hydrocarbyle en $C_1$-$C_4$ et/ou des combinaisons de ceux-ci.

**2.** Copolymère selon la revendication 1, dans lequel k = 2.

**3.** Copolymère selon la revendication 2, dans lequel les une ou plusieurs unités de répétition ADAMS selon la structure (V) comportent la forme réagie de 1-diméthylamino-3-phénylbut-3-ène, 1-diéthylamino-3-phénylbut-3-ène, 1-di-n-propylamino-3-phénylbut-3-ène, 1-diisopropylamino-3-phénylbut-3-ène, 1-di-2-propénylamino-3-phénylbut-3-ène, 1-di-n-butylamino-3-phénylbut-3-ène, 1-di-sec-butylamino-3-phénylbut-3-ène, 1-diisobutylamino-3-phénylbut-3-ène, 1-di-tert-butylamino-3-phénylbut-3-ène, 1-cyclohexylméthylamino-3-phénylbut-3-ène, 1-dicyclohexylamino-3-phénylbut-3-ène, 1-di-(2-éthylhexyl)amino-3-phénylbut-3-ène, 1-di-(méthoxyéthyl)amino-3-phénylbut-3-ène, 1-di-(éthoxyéthyl)amino-3-phénylbut-3-ène, 1-di-(phénoxyéthyl)amino-3-phénylbut-3-ène, 1-di-(méthylthioéthyl) amino-3-phénylbut-3-ène, 1-di-(éthylthioéthyl)amino-3-phénylbut-3-ène, 1-benzylméthylamino-3-phénylbut-3-ène, 1-dibenzylamino-3-phénylbut-3-ène, 1-benzylphénylamino-3-phénylbut-3-ène, 1-diphénylamino-3-phénylbut-3-ène, 1-dipyridylamino-3-phénylbut-3-ène, 1-phénylméthylamino-3-phénylbut-3-ène, 1-phénylméthoxyéthylamino-3-phénylbut-3-ène, 1-benzylméthoxyéthylamino-3-phénylbut-3-ène, 1-(N-morpholinyl)-3-phénylbut-3-ène, 1-(N-thiomorpholinyl)-3-phénylbut-3-ène, 1-(N-pipéridinyl)-3-phénylbut-3-ène, 1-(N-pipérazinyl)-3-phénylbut-3-ène, 1-(N-diazépanyl)-3-phénylbut-3-ène, 1-(N-pyrrolidinyl)-3-phénylbut-3-ène, 1-(N-pyrrolyl)-3-phénylbut-3-ène, 1-(1,2,3,4-tétrahydro-1-quinolinyl)-3-phénylbut-3-ène, 1-(1,2,3,4-tétrahydro-2-isoquinolinyl)-3-phénylbut-3-ène, 1-(N-indolinyl)-3-phénylbut-3-ène, 1-(N-indolyl)-3-phénylbut-3-ène, 1-(N-carbazolyl)-3-phénylbut-3-ène, 1-(N-phénothiazinyl)-3-phénylbut-3-ène, 1-(N-phénothiazinyl-S-oxyde)-3-phénylbut-3-ène, 1-(N-phénothiazinyl-S,S-dioxyde)-3-phénylbut-3-ène, 1-(N-phénoxazinyl)-3-phénylbut-3-ène, 1-(4-méthyl-1-pipérazinyl)-3-phénylbut-3-ène, 1-(5-méthyl-2,5-diazabicyclo[2.2.1]heptan-2-yl)-3-phénylbut-3-ène, 1-(5-méthyl-2,5-diazabicyclo[2.2.2]octan-2-yl)-3-phénylbut-3-ène, 1-(4-cyclopentyl-1-pipérazinyl)-3-phénylbut-3-ène, 1-(4-cyclopentadiényl-1-pipérazinyl)-3-phénylbut-3-ène, 1-(4-phényl-1-pipérazinyl)-3-phénylbut-3-ène, 1-(4-(thiazolyl)-1-pipérazinyl)-3-phénylbut-3-ène, 1-(4-(thiadiazolyl)-1-pipérazinyl)-3-phénylbut-3-ène, 1-(4-(triazolyl)-1-pipérazinyl)-3-phénylbut-3-ène, 1-(4-(1,2,3-benzotriazolyl)-1-pipérazinyl)-3-phénylbut-3-ène, 1-(N'-methyl-N-diazépanyl)-3-phénylbut-3-ène, N,N'-bis(3-phénylbut-3-ényl)diazépane, N,N'-bis(3-phénylbut-3-ényl)pipérazine, N,N'-bis(3-phénylbut-3-ényl)dihydrophénazine, N,N'-bis(3-phénylbut-3-ényl)dihydrobenzoindazole, N,N'-bis(3-phénylbut-3-ényl)dihydropermidine, N,N'-bis(3-phénylbut-3-ényl)octahydropyridoquinoline, N,N'-bis(3-phénylbut-3-ényl)octahydropyridoisoquinoline, N,N'-bis(3-phénylbut-3-ényl)hexahydropyrroloquinoline, N,N'-bis(3-phénylbut-3-ényl)hexahydropyrroloisoquinoline, N,N'-bis(3-phénylbut-3-ényl)hexahydropyrroloisoindole, N,N'-bis(3-phénylbut-3-ényl)diazabicyclo[2.2.1]heptane, N,N'-bis(3-phénylbut-3-ényl)diazabicyclo[2.2.2]octane, 1,3-bis(1-(3-phénylbut-3-ényl)pipéridin-4-yl)propane, bis(1-diméthylamino-3-phénylbut-3-ényl)benzène, bis(1-benzylméthylamino-3-phénylbut-3-ényl)benzène, bis(1-(N-morpholinyl)-3-phénylbut-3-ényl)benzène, bis(1-(N-thiomorpholinyl)-3-phénylbut-3-ényl)benzène, bis(1-(di-méthoxyéthyl) amino-3-phénylbut-3-ényl)benzène, bis(1-(N-pipéridinyl)-3-phénylbut-3-ényl)benzène, bis(1-(N-pyrrolidinyl)-3-phénylbut-3-ényl)benzène, bis(1-(4-méthyl-1-pipérazinyl))-3-phénylbut-3-ényl)benzène ou une combinaison de ceux-ci.

**4.** Copolymère selon les revendications 1 à 3, dans lequel les une ou plusieurs unités de répétition selon la structure (VI) comportent la forme réagie de styrène, et les une ou plusieurs unités de répétition selon les structures (VII$_a$) et (VII$_b$) comportent des formes réagies d'isoprène, de 1,3-butadiène ou une combinaison de celles-ci.

**5.** Copolymère selon les revendications 1 à 4, comportant en outre :

un résidu alkyle d'un initiateur monofonctionnel d'alkyl lithium, d'alkyl sodium et/ou d'alkyl potassium présent à une ou plusieurs extrémités terminales du squelette polymère ;

ou

un résidu alkyle d'un initiateur difonctionnel d'alkyl lithium, d'alkyl sodium et/ou d'alkyl potassium à environ un centre du squelette polymère.

**6.** Copolymère selon la revendication 5, dans lequel les résidus alkyle des initiateurs monofonctionnels comportent des groupes méthyle, éthyle, n-propyle, isopropyle, n-butyle, iso-butyle, sec-butyle, tert-butyle, n-amyle, iso-amyle, sec-amyle, tert-amyl, hexyle ou des combinaisons de ceux-ci ou
dans lequel les résidus alkyle d'initiateurs difonctionnels comportent des groupes propyle, butyle, pentyle, hexyle, 1,4-diphénylbutyle ou des combinaisons de ceux-ci.

**7.** Copolymère selon les revendications 1 à 6, dans lequel le copolymère est partiellement ou sensiblement hydrogéné.

**8.** Copolymère selon les revendications 1 à 7, dans lequel les une ou plusieurs unités de répétition de structure (V) sont intercalées au sein d'au moins un bloc polymère comportant les une ou plusieurs unités de répétition de structures (VI), ($VII_a$), ($VII_b$) ou des combinaisons de celles-ci.

**9.** Copolymère selon la revendication 8, dans lequel les une ou plusieurs unités de répétition de structure (V) alternent partiellement ou sensiblement avec les une ou plusieurs unités de répétition de structures (VI), ($VII_a$), ($VII_b$) ou des combinaisons de celles-ci, formant ainsi une ou plusieurs unités de répétition correspondant à des structures (IX), ($X_a$), ($X_b$) ou des combinaisons de celles-ci :

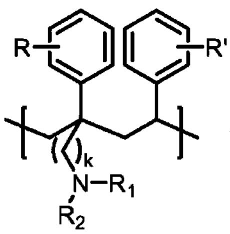
(IX)

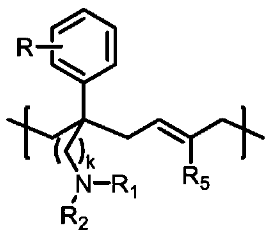
($X_a$)

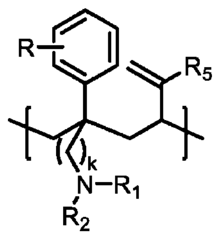
($X_b$)

**10.** Copolymère selon la revendication 9, dans lequel le copolymère comporte un ou plusieurs blocs polymères comportant une ou plusieurs unités de répétition de structures (VI), ($VII_a$), ($VII_b$) ou des combinaisons de celles-ci, et n'incluant pas une ou plusieurs unités de répétition selon la structure (V).

**11.** Copolymère selon la revendication 10, dans lequel les un ou plusieurs blocs polymères du copolymère forment une architecture polymère distribuée, un dibloc, un tribloc, un tétrabloc, un pentabloc, un hexabloc, une architecture polymère en étoile ou des combinaisons de ceux-ci.

**12.** Copolymère selon les revendications 1 à 11, dans lequel dans la structure (V), $R_1$, $R_2$, $R'_1$, $R'_2$ ou une combinaison de ceux-ci sont des groupes protecteurs chimiques clivables.

**13.** Copolymère selon les revendications 1 à 12, dans lequel le copolymère comporte en outre un ou plusieurs groupes fonctionnels -OH, -NH- ou -$NH_2$, ou une combinaison de ceux-ci, à une ou plusieurs extrémités terminales du squelette copolymère.

**14.** Copolymère selon les revendications 1 à 13, dans lequel un groupe amino dans une ou plusieurs unités de répétition de structure (V) sont protonés ou alkylés à leur sel d'ammonium correspondant.

**15.** Polymère comportant :

(a) trois unités de répétition ou plus d'alpha-méthylstyrène dérivé d'amine (ADAMS) selon la structure (V) :

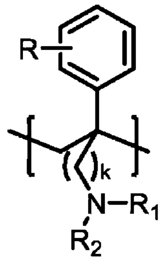

(V)

dans lequel :

k est un nombre entier de 1 à 3 ;
$R_1$ et $R_2$ sont chacun indépendamment un groupe hydrocarbyle ou un groupe hydrocarboné ayant 1 à 4 hétéroatomes supplémentaires sélectionnés dans le groupe consistant en O, N, S, P, Se et des combinaisons de ceux-ci, ou dans lequel $R_1$ et $R_2$ sont reliés pour former une fraction contenant au moins un cycle à 5 à 12 chaînons, de 3 à 28 carbones, et facultativement 1 à 6 hétéroatomes supplémentaires sélectionnés dans le groupe consistant en O, N, S, P, Se et des combinaisons de ceux-ci ;
R est hydrogène, un cycle phényle co-fixé à deux positions de carbone de cycle voisines avec le cycle phényle représenté de manière à former un ensemble naphtalène, un groupe phényle fixé à un seul carbone du cycle phényle représenté, un groupe hydrocarbyle en $C_1$-$C_4$, un groupe hydrocarbyle en $C_1$-$C_6$ contenant 1 à 4 hétéroatomes supplémentaires sélectionnés dans le groupe consistant en O, N, S, P, Se et des combinaisons de ceux-ci, ou un deuxième groupe fonctionnel amino de structure (III)

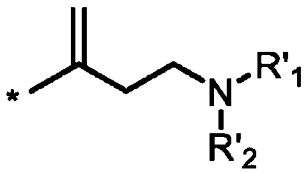

(III)

fixé par l'astérisque, $R'_1$ et $R'_2$ étant indépendamment identiques ou différents de $R_1$ et $R_2$ mais définis de manière identique ; et

(b) sensiblement absents d'autres unités de répétition.

**16.** Copolymère comportant le produit de réaction :

(a) d'un ou de plusieurs monomères selon la structure (I)

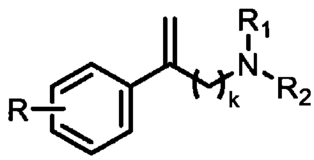

(I)

dans lequel :

k est un nombre entier de 1 à 3 ;
$R_1$ et $R_2$ sont chacun indépendamment un groupe hydrocarbyle ou un groupe hydrocarboné ayant 1 à 4 hétéroatomes supplémentaires sélectionnés dans le groupe consistant en O, N, S, P, Se et des combinaisons de ceux-ci, ou dans lequel $R_1$ et $R_2$ sont reliés pour former une fraction contenant au moins un cycle à 5 à 12 chaînons, de 3 à 28 carbones, et facultativement 1 à 6 hétéroatomes supplémentaires sélectionnés dans le groupe consistant en O, N, S, P, Se et des combinaisons de ceux-ci ;
R est hydrogène, un cycle phényle co-fixé à deux positions de carbone de cycle voisines avec le cycle phényle représenté de manière à former un ensemble naphtalène, un groupe phényle fixé à un seul carbone

du cycle phényle représenté, un groupe hydrocarbyle en $C_1$-$C_4$, un groupe hydrocarbyle en $C_1$-$C_6$ contenant 1 à 4 hétéroatomes supplémentaires sélectionnés dans le groupe consistant en O, N, S, P, Se et des combinaisons de ceux-ci, ou un deuxième groupe fonctionnel amino de structure (III)

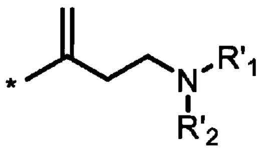

(III)

fixé par l'astérisque, R'$_1$ et R'$_2$ étant indépendamment identiques ou différents de $R_1$ et $R_2$ mais définis de manière identique ;

(b) de l'isoprène, du 1,3-butadiène, du styrène ou d'une combinaison de ceux-ci ; et
(c) d'un initiateur d'alkyl lithium, d'alkyl sodium, d'alkyl potassium ou d'une combinaison de ceux-ci.

**17.** Copolymère selon la revendication 16, dans lequel les un ou plusieurs monomères comportent 1-diméthylamino-3-phénylbut-3-ène, 1-diéthylamino-3-phénylbut-3-ène, 1-di-n-propylamino-3-phénylbut-3-ène, 1-diisopropylamino-3-phénylbut-3-ène, 1-di-2-propénylamino-3-phénylbut-3-ène, 1-di-n-butylamino-3-phénylbut-3-ène, 1-di-sec-butylamino-3-phénylbut-3-ène, 1-diisobutylamino-3-phénylbut-3-ène, 1-di-tert-butylamino-3-phénylbut-3-ène, 1-cyclohexylméthylamino-3-phénylbut-3-ène, 1-dicyclohexylamino-3-phénylbut-3-ène, 1-di-(2-éthylhexyl)amino-3-phénylbut-3-ène, 1-di-(méthoxyéthyl)amino-3-phénylbut-3-ène, 1-di-(éthoxyéthyl)amino-3-phénylbut-3-ène, 1-di-(phénoxyéthyl)amino-3-phénylbut-3-ène, 1-di-(méthylthioéthyl)amino-3-phénylbut-3-ène, 1-di-(éthylthioéthyl)amino-3-phénylbut-3-ène, 1-benzylméthylamino-3-phénylbut-3-ène, 1-dibenzylamino-3-phénylbut-3-ène, 1-benzylphénylamino-3-phénylbut-3-ène, 1-diphénylamino-3-phénylbut-3-ène, 1-dipyridylamino-3-phénylbut-3-ène, 1-phénylméthylamino-3-phénylbut-3-ène, 1-phénylméthoxyéthylamino-3-phénylbut-3-ène, 1-benzylméthoxyéthylamino-3-phénylbut-3-ène, 1-(N-morpholinyl)-3-phénylbut-3-ène, 1-(N-thiomorpholinyl)-3-phénylbut-3-ène, 1-(N-pipéridinyl)-3-phénylbut-3-ène, 1-(N-pipérazinyl)-3-phénylbut-3-ène, 1-(N-diazépanyl)-3-phénylbut-3-ène, 1-(N-pyrrolidinyl)-3-phénylbut-3-ène, 1-(N-pyrrolyl)-3-phénylbut-3-ène, 1-(1,2,3,4-tétrahydro-1-quinolinyl)-3-phénylbut-3-ène, 1-(1,2,3,4-tétrahydro-2-isoquinolinyl)-3-phénylbut-3-ène, 1-(N-indolinyl)-3-phénylbut-3-ène, 1-(N-indolyl)-3-phénylbut-3-ène, 1-(N-carbazolyl)-3-phénylbut-3-ène, 1-(N-phénothiazinyl)-3-phénylbut-3-ène, 1-(N-phénothiazinyl-S-oxyde)-3-phénylbut-3-ène, 1-(N-phénothiazinyl-S,S-dioxyde)-3-phénylbut-3-ène, 1-(N-phénoxazinyl)-3-phénylbut-3-ène, 1-(4-méthyl-1-pipérazinyl)-3-phénylbut-3-ène, 1-(5-méthyl-2,5-diazabicyclo[2.2.1]heptan-2-yl)-3-phénylbut-3-ène, 1-(5-méthyl-2,5-diazabicyclo[2.2.2]octan-2-yl)-3-phénylbut-3-ène, 1-(4-cyclopentyl-1-pipérazinyl)-3-phénylbut-3-ène, 1-(4-cyclopentadiényl-1-pipérazinyl)-3-phénylbut-3-ène, 1-(4-phényl-1-pipérazinyl)-3-phénylbut-3-ène, 1-(4-(thiazolyl)-1-pipérazinyl)-3-phénylbut-3-ène, 1-(4-(thiadiazolyl)-1-pipérazinyl)-3-phénylbut-3-ène, 1-(4-(triazolyl)-1-pipérazinyl)-3-phénylbut-3-ène, 1-(4-(1,2,3-benzotriazolyl)-1-pipérazinyl)-3-phénylbut-3-ène, 1-(N'-methyl-N-diazépanyl)-3-phénylbut-3-ène, N,N'-bis(3-phénylbut-3-ényl)diazépane, N,N'-bis(3-phénylbut-3-ényl)pipérazine, N,N'-bis(3-phénylbut-3-ényl)dihydrophénazine, N,N'-bis(3-phénylbut-3-ényl)dihydrobenzoindazole, N,N'-bis(3-phénylbut-3-ényl)dihydropermidine, N,N'-bis(3-phénylbut-3-ényl)octahydropyridoquinoline, N,N'-bis(3-phénylbut-3-ényl)octahydropyridoisoquinoline, N,N'-bis(3-phénylbut-3-ényl)hexahydropyrroloquinoline, N,N'-bis(3-phénylbut-3-ényl)hexahydropyrroloisoquinoline, N,N'-bis(3-phénylbut-3-ényl)hexahydropyrroloisoindole, N,N'-bis(3-phénylbut-3-ényl)diazabicyclo[2.2.1]heptane, N,N'-bis(3-phénylbut-3-ényl)diazabicyclo[2.2.2]octane, 1,3-bis(1-(3-phénylbut-3-ényl)pipéridin-4-yl)propane, bis(1-diméthylamino-3-phénylbut-3-ényl)benzène, bis(1-benzylméthylamino-3-phénylbut-3-ényl)benzène, bis(1-(N-morpholinyl)-3-phénylbut-3-ényl)benzène, bis(1-(N-thiomorpholinyl)-3-phénylbut-3-ényl)benzène, bis(1-(di-méthoxyéthyl)amino-3-phénylbut-3-ényl)benzène, bis(1-(N-pipéridinyl)-3-phénylbut-3-ényl)benzène, bis(1-(N-pyrrolidinyl)-3-phénylbut-3-ényl)benzène, bis(1-(4-méthyl-1-pipérazinyl))-3-phénylbut-3-ényl)benzène ou une combinaison de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010152364 A
- US 6486272 B
- US 9364825 B
- US 10202494 B
- US 10046285 B
- GB 1381755 A
- US 7790661 B
- US 7960320 B
- US 8778854 B
- US 10414999 B
- WO 2021127183 A
- US 63483365
- US 2778826 A
- US 6492469 B
- US 3595941 A
- US 3468972 A
- US 3135716 A
- US 3078254 A
- US 3594452 A
- CA 716645
- US 4010226 A
- US 3985830 A
- US 4391949 A
- US 4284835 A
- US 4980331 A
- US 5736612 A
- US 5773521 A
- US 8604136 B
- US 9809671 B


### Non-patent literature cited in the description


- **SCHMIDLE ; MANSFIELD**. *The Aminomethylation of Olefins. I. The Reaction of Secondary Amines, Formaldehyde, and Olefins*, 1955
- **1983 ; COHEN ; ONOPCHENKO**. *Competing Hydride Transfer and Ene Reactions in the Aminoalkylation of 1-Alkenes with N,N-Dimethylmethyleniminium Ions. A Literature Correction*
- Polymer Physics. **RACHAPUDY et al.** Journal of Polymer Science. 1979, vol. 17, 1211-1222
- **LINTSELL et al.** Synthesis and characterization of α, ω- and α-functionalized hydrogenated polybutadienes: telechelic and semi-telechelic amine and phosophite terminated polymers. *Polymer*, 1997, vol. 38 (11), 2835